(19) Europäisches Patentamt
European Patent Office
Office européen des brevets

(11) EP 4 797 353 A2

(12) EUROPEAN PATENT APPLICATION

(43) Date of publication:
**26.08.2026 Bulletin 2026/35**

(21) Application number: **26157578.1**

(22) Date of filing: **10.02.2026**

(51) International Patent Classification (IPC):
***H01M 4/36*** (2006.01) ***H01M 4/485*** (2010.01)
***H01M 4/525*** (2010.01) ***H01M 10/0525*** (2010.01)
***C01G 23/04*** (2006.01) ***C01G 49/00*** (2006.01)

(52) Cooperative Patent Classification (CPC):
**H01M 4/485; C01G 23/04; C01G 49/0027; H01M 4/364; H01M 4/525; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.02.2025 US 202563760156 P**

(71) Applicant: **Largan Precision Co. Ltd.**
**Taichung City 408 (TW)**

(72) Inventors:
- **CHEN, Wei-Yuan**
  **405 Taichung City (TW)**
- **CHEN, Po-Tsun**
  **408 Taichung City (TW)**
- **TSAI, Ying-Chia**
  **408 Taichung City (TW)**

(74) Representative: **Jakelski & Althoff Patentanwälte PartG mbB Patentanwälte Partnerschaftsgesellschaft Mollenbachstraße 37 71229 Leonberg (DE)**

# (54) COMPOSITION, ELECTRODE AND BATTERY

(57) A composition includes a metal oxide and at least two composite metal oxides. The metal oxide is an iron oxide. The at least two composite metal oxides include a lithium-titanium composite oxide and a niobium-titanium composite oxide. Each of the metal oxide and the at least two composite metal oxides is an active material.

7.0
6.0
5.0
4.0
3.0
2.0
1.0
0.0
-1.0
-2.0
-3.0
-4.0
-5.0
-6.0
-7.0
dQ/dV (mAh/V)
0.0
0.5
1.0
1.5
2.0
2.5
3.0
Voltage (V vs Li+/Li)

Fig. 1



Processed by Luminess, 75001 PARIS (FR)

## Description

## BACKGROUND

Technical Field

The present disclosure relates to a composition, an electrode and a battery. More particularly, the present disclosure relates to a composition, an electrode and a battery which can improve a stability of charge and discharge and a service life of the battery.

Description of Related Art

In order to enhance a capacity and a service life of a battery to optimize a user experience of an electronic device, various manufacturers are committed to develop an innovative lithium ion battery. Some of the manufacturers have switched a single-compound electrode to a multi-compound electrode, striving to generate the synergistic effects with the multiple compounds and reduce the defects of the lithium ion batteries. However, the multi-compound electrode still cannot meet the requirements of the high capacity and the long service life at the same time, it is still necessary to develop the compound combinations that are suitable for the use as the electrodes.

## SUMMARY

According to one aspect of the present disclosure, a composition includes a metal oxide and at least two composite metal oxides. The metal oxide is an iron oxide. The at least two composite metal oxides include a lithium-titanium composite oxide and a niobium-titanium composite oxide. Each of the metal oxide and the at least two composite metal oxides is an active material. When a weight percentage of the iron oxide in the composition is Wf, a weight percentage of the lithium-titanium composite oxide in the composition is Wit, a weight percentage of the niobium-titanium composite oxide in the composition is Wtn, the following condition is satisfied: $0.10 \leq Wf/(Wlt+Wtn) \leq 4.00$.

According to the composition of the foregoing aspect, when the weight percentage of the lithium-titanium composite oxide in the composition is Wlt, the weight percentage of the niobium-titanium composite oxide in the composition is Wtn, the following condition can be satisfied: $0.80 \leq Wlt/Wtn \leq 1.30$.

According to the composition of the foregoing aspect, when the weight percentage of the iron oxide in the composition is Wf, the weight percentage of the lithium-titanium composite oxide in the composition is Wlt, the following condition can be satisfied: $1.00 \leq Wf/Wlt \leq 3.00$.

According to the composition of the foregoing aspect, when the weight percentage of the iron oxide in the composition is Wf, the weight percentage of the niobium-titanium composite oxide in the composition is Wtn, the following condition can be satisfied: $1.00 \leq Wf/Wtn \leq 3.00$.

According to the composition of the foregoing aspect, the iron oxide can be a triiron tetraoxide.

According to the composition of the foregoing aspect, when an observed particle size of the iron oxide is SDf, the following condition can be satisfied: $0.300\ \mu m \leq SDf \leq 1.000\ \mu m$.

According to the composition of the foregoing aspect, when an average of the observed particle size of the iron oxide is aSDf, the following condition can be satisfied: $0.500\ \mu m \leq aSDf \leq 0.900\ \mu m$.

According to the composition of the foregoing aspect, when an observed particle size of the lithium-titanium composite oxide is SDlt, the following condition can be satisfied: $8.000\ \mu m \leq SDlt \leq 18.000\ \mu m$.

According to the composition of the foregoing aspect, when an average of the observed particle size of the lithium-titanium composite oxide is aSDlt, the following condition can be satisfied: $10.000\ \mu m \leq aSDlt \leq 16.000\ \mu m$.

According to the composition of the foregoing aspect, when an observed particle size of the niobium-titanium composite oxide is SDtn, the following condition can be satisfied: $5.000\ \mu m \leq SDtn \leq 9.000\ \mu m$.

According to the composition of the foregoing aspect, when an average of the observed particle size of the niobium-titanium composite oxide is aSDtn, the following condition can be satisfied: $6.000\ \mu m \leq aSDtn \leq 8.000\ \mu m$.

According to another aspect of the present disclosure, an electrode includes the composition according to the aforementioned aspect, a conductive additive and an adhesive.

According to the electrode of the foregoing aspect, when a weight percentage of the composition in the electrode is Wc, a weight percentage of the conductive additive in the electrode is Wca, the following condition can be satisfied: $1.50 \leq Wc/Wca \leq 10.00$.

According to the electrode of the foregoing aspect, when the weight percentage of the composition in the electrode is Wc, the weight percentage of the conductive additive in the electrode is Wca, a weight percentage of the adhesive in the electrode is Wa, the following condition can be satisfied: $3.00 \leq (Wc+Wca)/Wa \leq 10.00$.

According to further another aspect of the present disclosure, a battery includes the electrode according to the

aforementioned aspect, a cathode and an electrolyte. The electrode is an anode.

According to still another aspect of the present disclosure, a composition includes a metal oxide and a composite metal oxide. The metal oxide is an iron oxide, and the iron oxide is a triiron tetraoxide. The composite metal oxide is a lithium-titanium composite oxide or a niobium-titanium composite oxide. Each of the metal oxide and the composite metal oxide is an active material. When a weight percentage of the iron oxide in the composition is Wf, a weight percentage of the lithium-titanium composite oxide in the composition is Wit, a weight percentage of the niobium-titanium composite oxide in the composition is Wtn, the following condition is satisfied: $0.05 \leq Wf/Wlt \leq 10.00$; or $0.05 \leq Wf/Wtn \leq 10.00$.

According to the composition of the foregoing aspect, when a D50 particle size of the iron oxide is D50f, the following condition can be satisfied: $0.200\ \mu m \leq D50f \leq 1.200\ \mu m$.

According to the composition of the foregoing aspect, when a D50 particle size of the lithium-titanium composite oxide is D50lt, the following condition can be satisfied: $5.000\ \mu m \leq D50lt \leq 20.000\ \mu m$.

According to the composition of the foregoing aspect, when a D50 particle size of the niobium-titanium composite oxide is D50tn, the following condition can be satisfied: $3.000\ \mu m \leq D50tn \leq 10.000\ \mu m$.

According to yet another aspect of the present disclosure, an electrode includes the composition according to the aforementioned aspect, a conductive additive and an adhesive.

According to the electrode of the foregoing aspect, when a weight percentage of the composition in the electrode is Wc, a weight percentage of the conductive additive in the electrode is Wca, the following condition can be satisfied: $1.00 < Wc/Wca \leq 20.00$.

According to the electrode of the foregoing aspect, when the weight percentage of the composition in the electrode is Wc, the weight percentage of the conductive additive in the electrode is Wca, a weight percentage of the adhesive in the electrode is Wa, the following condition can be satisfied: $1.00 \leq (Wc+Wca)/Wa \leq 20.00$.

According to the electrode of the foregoing aspect, when a density of the electrode is DSet, the following condition can be satisfied: $1.00\ g/cm^3 \leq DSet \leq 2.50\ g/cm^3$.

According to the electrode of the foregoing aspect, when a resistance of the electrode is Ret, the following condition can be satisfied: $0.3\ m\Omega \leq Ret \leq 2.0\ m\Omega$.

According to more another aspect of the present disclosure, a battery includes the electrode according to the aforementioned aspect, a cathode and an electrolyte. The electrode is an anode.

According to the battery of the foregoing aspect, the battery has a first oxidation peak, a second oxidation peak, a first reduction peak and a second reduction peak, when a voltage of the first oxidation peak is Vo1, a voltage of the first reduction peak is Vr1, the following condition can be satisfied: $0.30\ V \leq |Vo1-Vr1| \leq 1.20\ V$.

According to the battery of the foregoing aspect, when a capacity at a 10th discharge of the battery with a current of 1 C is C1V10, a capacity at a 100th discharge of the battery with the current of 1 C is C1V100, the following condition can be satisfied: $0.80 \leq C1V100/C1V10$.

According to the battery of the foregoing aspect, when the capacity at the 10th discharge of the battery with the current of 1 C is C1V10, a capacity at a 400th discharge of the battery with the current of 1 C is C1V400, the following condition can be satisfied: $0.80 \leq C1V400/C1V10$.

According to the battery of the foregoing aspect, when the capacity at the 10th discharge of the battery with the current of 1 C is C1V10, a capacity at a 500th discharge of the battery with the current of 1 C is C1V500, the following condition can be satisfied: $0.80 \leq C1V500/C1V10$.

According to the battery of the foregoing aspect, when a number of cycles of the battery dropped to 80% of a capacity at a current of 1 C is CN80, the following condition can be satisfied: $300 \leq CN80$.

According to the battery of the foregoing aspect, when the weight percentage of the iron oxide in the composition is Wf, the weight percentage of the lithium-titanium composite oxide in the composition is Wlt, the weight percentage of the niobium-titanium composite oxide in the composition is Wtn, the weight percentage of the composition in the electrode is Wc, the weight percentage of the conductive additive in the electrode is Wca, the weight percentage of the adhesive in the electrode is Wa, the following conditions can be satisfied: $0.90 \leq Wf/(Wlt+Wtn) \leq 1.20$; $0.90 \leq Wlt/Wtn \leq 1.10$; $1.80 \leq Wf/Wlt \leq 2.20$; $1.80 \leq Wf/Wtn \leq 2.20$; $2.90 \leq Wc/Wca \leq 3.30$; and $5.00 \leq (Wc+Wca)/Wa \leq 6.00$.

## BRIEF DESCRIPTION OF THE DRAWINGS

The present disclosure can be more fully understood by reading the following detailed description of the embodiment, with reference made to the accompanying drawings as follows:

Fig. 1 is a diagram of charging and discharging voltage-electric quantity differential curve with a constant current of Example 5.

Fig. 2 is a diagram of cubic differential curve during charging of Example 5.

Fig. 3 is a diagram of cubic differential curve during discharging of Example 5.

Fig. 4 is a discharge cycle diagram with a current of 1 C of Example 5.

## DETAILED DESCRIPTION

The present disclosure provides a composition, an electrode and a battery. The composition formed by a metal oxide and a composite metal oxide can increase the kind of the oxidation-reduction reaction and can provide more choices of the reaction pathway for the electron, which is favorable for reducing the bottleneck of charge and discharge and increasing the stability of charge and discharge. Furthermore, the gap in the single compound can be filled by mixing uniformly the metal oxide and the composite metal oxide, which is favorable for improving the energy density. Furthermore, the coulombic efficiency of the composition can be improved by mixing an iron oxide, a lithium-titanium composite oxide and a niobium-titanium composite oxide or mixing the iron oxide and the lithium-titanium composite oxide, which is favorable for improving the battery life.

According to one embodiment of the present disclosure, a composition includes a metal oxide and at least two composite metal oxides. The metal oxide is an iron oxide. The at least two composite metal oxides include a lithium-titanium composite oxide and a niobium-titanium composite oxide. Each of the metal oxide and the at least two composite metal oxides is an active material. When a weight percentage of the iron oxide in the composition is Wf, a weight percentage of the lithium-titanium composite oxide in the composition is Wlt, a weight percentage of the niobium-titanium composite oxide in the composition is Wtn, the following condition is satisfied: $0.10 \leq Wf/(Wlt+Wtn) \leq 4.00$. Therefore, the composition formed by the metal oxide and the composite metal oxide can increase the kind of the oxidation-reduction reaction and can provide more choices of the reaction pathway for the electron, which is favorable for reducing the bottleneck of charge and discharge and increasing the stability of charge and discharge. Furthermore, the gap in the single compound can be filled by mixing uniformly the metal oxide and the composite metal oxide, which is favorable for improving the energy density. Furthermore, the coulombic efficiency of the composition can be improved by mixing the iron oxide, the lithium-titanium composite oxide and the niobium-titanium composite oxide, which is favorable for improving the battery life. Furthermore, the composition can be achieved the balance between the energy density and the battery life by designing a ratio of the iron oxide and the composite metal oxide.

According to another embodiment of the present disclosure, a composition includes a metal oxide and a composite metal oxide. The metal oxide is an iron oxide, and the iron oxide is a triiron tetraoxide. The composite metal oxide includes a lithium-titanium composite oxide or a niobium-titanium composite oxide. Each of the metal oxide and the composite metal oxide is an active material. When a weight percentage of the iron oxide in the composition is Wf, a weight percentage of the lithium-titanium composite oxide in the composition is Wlt, a weight percentage of the niobium-titanium composite oxide in the composition is Wtn, the following condition is satisfied: $0.05 \leq Wf/Wlt \leq 10.00$; or $0.05 \leq Wf/Wtn \leq 10.00$. Therefore, the composition formed by the metal oxide and the composite metal oxide can increase the kind of the oxidation-reduction reaction and can provide more choices of the reaction pathway for the electron, which is favorable for reducing the bottleneck of charge and discharge and increasing the stability of charge and discharge. Furthermore, the gap in the single compound can be filled by mixing uniformly the metal oxide and the composite metal oxide, which is favorable for improving the energy density. Furthermore, the coulombic efficiency of the composition can be improved by mixing the iron oxide and the lithium-titanium composite oxide or mixing the iron oxide and the niobium-titanium composite oxide, which is favorable for improving the battery life. Furthermore, the difference in the compound content can be reduced by designing a specific ratio of the iron oxide and the lithium-titanium composite oxide or designing a specific ratio of the iron oxide and the niobium-titanium composite oxide, which is favorable for maximizing the synergistic effect of the composition.

According to the composition of the present disclosure, when the weight percentage of the iron oxide in the composition is Wf, the weight percentage of the lithium-titanium composite oxide in the composition is Wlt, the weight percentage of the niobium-titanium composite oxide in the composition is Wtn, the following condition can be satisfied: $0.20 \leq Wf/(Wlt+Wtn) \leq 3.00$. Therefore, the composition can be achieved the balance between the energy density and the battery life by designing a ratio of the iron oxide and the composite metal oxide. Furthermore, the following condition can be satisfied: $0.30 \leq Wf/(Wlt+Wtn) \leq 2.50$. Furthermore, the following condition can be satisfied: $0.40 \leq Wf/(Wlt+Wtn) \leq 2.00$. Furthermore, the following condition can be satisfied: $0.80 \leq Wf/(Wlt+Wtn) \leq 1.50$. Furthermore, the following condition can be satisfied: $0.90 \leq Wf/(Wlt+Wtn) \leq 1.20$.

According to the composition of the present disclosure, when the weight percentage of the iron oxide in the composition is Wf, the weight percentage of the lithium-titanium composite oxide in the composition is Wit, the following condition can be satisfied: $1.00 \leq Wf/Wlt \leq 3.00$. Therefore, the difference in the compound content can be reduced by designing a specific ratio of the iron oxide and the lithium-titanium composite oxide, which is favorable for maximizing the synergistic effect of the composition. Furthermore, the following condition can be satisfied: $0.30 \leq Wf/Wlt \leq 8.00$. Furthermore, the following condition can be satisfied: $0.50 \leq Wf/Wlt \leq 5.00$. Furthermore, the following condition can

be satisfied: $1.50 \leq Wf/Wlt \leq 2.50$. Furthermore, the following condition can be satisfied: $1.80 \leq Wf/Wlt \leq 2.20$.

According to the composition of the present disclosure, when the weight percentage of the iron oxide in the composition is Wf, the weight percentage of the niobium-titanium composite oxide in the composition is Wtn, the following condition can be satisfied: $1.00 \leq Wf/Wtn \leq 3.00$. Therefore, the difference in the compound content can be reduced by designing a specific ratio of the iron oxide and the niobium-titanium composite oxide, which is favorable for maximizing the synergistic effect of the composition. Furthermore, the following condition can be satisfied: $0.30 \leq Wf/Wtn \leq 8.00$. Furthermore, the following condition can be satisfied: $0.50 \leq Wf/Wtn \leq 5.00$. Furthermore, the following condition can be satisfied: $1.50 \leq Wf/Wtn \leq 2.50$. Furthermore, the following condition can be satisfied: $1.80 \leq Wf/Wtn \leq 2.20$.

According to the composition of the present disclosure, when the weight percentage of the lithium-titanium composite oxide in the composition is Wlt, the weight percentage of the niobium-titanium composite oxide in the composition is Wtn, the following condition can be satisfied: $0.80 \leq Wlt/Wtn \leq 1.30$. Therefore, the synergistic effect between the lithium-titanium composite oxide and the niobium-titanium composite oxide can be generated by designing the similar weight percentages of the lithium-titanium composite oxide and the niobium-titanium composite oxide in the composition, which is favorable for improving the battery life and increasing the charge and discharge rate of the battery product. Furthermore, the following condition can be satisfied: $0.10 \leq Wlt/Wtn \leq 10.0$. Furthermore, the following condition can be satisfied: $0.30 \leq Wlt/Wtn \leq 3.00$. Furthermore, the following condition can be satisfied: $0.50 \leq Wlt/Wtn \leq 2.00$. Furthermore, the following condition can be satisfied: $0.90 \leq Wlt/Wtn \leq 1.10$.

According to the composition of the present disclosure, the iron oxide can be a triiron tetraoxide. Therefore, the oxidation-reduction ability of the composition can be enhanced by selecting the triiron tetraoxide that has a relatively high chemical activity among the iron oxides, which is favorable for improving the charge and discharge rate of the battery.

According to the composition of the present disclosure, when an observed particle size of the iron oxide is SDf, the following condition can be satisfied: $0.300\ \mu m \leq SDf \leq 1.000\ \mu m$. Therefore, the chemical activity of the iron oxide can be optimized by using the iron oxide with a specific particle size that can be observed, which is favorable for improving the energy density of the composition conveniently. Furthermore, the following condition can be satisfied: $0.100\ \mu m \leq SDf \leq 1.500\ \mu m$. Furthermore, the following condition can be satisfied: $0.200\ \mu m \leq SDf \leq 1.200\ \mu m$. Furthermore, the following condition can be satisfied: $0.500\ \mu m \leq SDf \leq 0.900\ \mu m$. Furthermore, the following condition can be satisfied: $0.600\ \mu m \leq SDf \leq 0.800\ \mu m$. Furthermore, the following condition can be satisfied: $0.650\ \mu m \leq SDf \leq 0.750\ \mu m$.

According to the composition of the present disclosure, when an average of the observed particle size of the iron oxide is aSDf, the following condition can be satisfied: $0.500\ \mu m \leq aSDf \leq 0.900\ \mu m$. Therefore, the overall iron oxide has the excellent chemical activity is ensured by limiting the average particle size of the iron oxide that can be observed. Furthermore, the following condition can be satisfied: $0.100\ \mu m \leq aSDf \leq 1.500\ \mu m$. Furthermore, the following condition can be satisfied: $0.200\ \mu m \leq aSDf \leq 1.200\ \mu m$. Furthermore, the following condition can be satisfied: $0.300\ \mu m \leq aSDf \leq 1.000\ \mu m$. Furthermore, the following condition can be satisfied: $0.600\ \mu m \leq aSDf \leq 0.800\ \mu m$. Furthermore, the following condition can be satisfied: $0.650\ \mu m \leq aSDf \leq 0.750\ \mu m$.

According to the composition of the present disclosure, when an observed particle size of the lithium-titanium composite oxide is SDlt, the following condition can be satisfied: $8.000\ \mu m \leq SDlt \leq 18.000\ \mu m$. Therefore, the chemical activity of the lithium-titanium composite oxide can be optimized by using the lithium-titanium composite oxide with a specific particle size that can be observed, which is favorable for improving the battery life conveniently. Furthermore, the following condition can be satisfied: $3.000\ \mu m \leq SDlt \leq 25.000\ \mu m$. Furthermore, the following condition can be satisfied: $5.000\ \mu m \leq SDlt \leq 20.000\ \mu m$. Furthermore, the following condition can be satisfied: $10.000\ \mu m \leq SDlt \leq 16.000\ \mu m$. Furthermore, the following condition can be satisfied: $12.000\ \mu m \leq SDlt \leq 14.000\ \mu m$. Furthermore, the following condition can be satisfied: $12.500\ \mu m \leq SDlt \leq 13.500\ \mu m$.

According to the composition of the present disclosure, when an average of the observed particle size of the lithium-titanium composite oxide is aSDlt, the following condition can be satisfied: $10.000\ \mu m \leq aSDlt \leq 16.000\ \mu m$. Therefore, the overall lithium-titanium composite oxide has the excellent chemical activity is ensured by limiting the average particle size of the lithium-titanium composite oxide that can be observed. Furthermore, the following condition can be satisfied: $3.000\ \mu m \leq aSDlt \leq 25.000\ \mu m$. Furthermore, the following condition can be satisfied: $5.000\ \mu m \leq aSDlt \leq 20.000\ \mu m$. Furthermore, the following condition can be satisfied: $8.000\ \mu m \leq aSDlt \leq 18.000\ \mu m$. Furthermore, the following condition can be satisfied: $12.000\ \mu m \leq aSDlt \leq 14.000\ \mu m$. Furthermore, the following condition can be satisfied: $12.500\ \mu m \leq aSDlt \leq 13.500\ \mu m$.

According to the composition of the present disclosure, when an observed particle size of the niobium-titanium composite oxide is SDtn, the following condition can be satisfied: $5.000\ \mu m \leq SDtn \leq 9.000\ \mu m$. Therefore, the chemical activity of the niobium-titanium composite oxide can be optimized by using the niobium-titanium composite oxide with a specific particle size that can be observed, which is favorable for improving the battery life conveniently. Furthermore, the following condition can be satisfied: $3.000\ \mu m \leq SDtn \leq 10.000\ \mu m$. Furthermore, the following condition can be satisfied: $6.000\ \mu m \leq SDtn \leq 8.000\ \mu m$. Furthermore, the following condition can be satisfied: $6.500\ \mu m \leq SDtn \leq 7.000\ \mu m$. Furthermore, the following condition can be satisfied: $6.700\ \mu m \leq SDtn \leq 6.900\ \mu m$.

According to the composition of the present disclosure, when an average of the observed particle size of the

niobium-titanium composite oxide is aSDtn, the following condition can be satisfied: 6.000 μm ≤ aSDtn ≤ 8.000 μm. Therefore, the overall niobium-titanium composite oxide has the excellent chemical activity is ensured by limiting the average particle size of the niobium-titanium composite oxide that can be observed. Furthermore, the following condition can be satisfied: 3.000 μm ≤ aSDtn ≤ 10.000 μm. Furthermore, the following condition can be satisfied: 5.000 μm ≤ aSDtn ≤ 9.000 μm. Furthermore, the following condition can be satisfied: 6.500 μm ≤ aSDtn ≤ 7.000 μm. Furthermore, the following condition can be satisfied: 6.700 μm ≤ aSDtn ≤ 6.900 μm.

According to the composition of the present disclosure, when a D50 particle size of the iron oxide is D50f, the following condition can be satisfied: 0.200 μm ≤ D50f ≤ 1.200 μm. Therefore, the chemical activity of the iron oxide can be optimized by designing the iron oxide with a specific particle size, which is favorable for improving the energy density of the composition. Furthermore, the following condition can be satisfied: 0.100 μm ≤ D50f ≤ 1.500 μm. Furthermore, the following condition can be satisfied: 0.300 μm ≤ D50f ≤ 1.000 μm. Furthermore, the following condition can be satisfied: 0.500 μm ≤ D50f ≤ 0.900 μm. Furthermore, the following condition can be satisfied: 0.600 μm ≤ D50f ≤ 0.800 μm. Furthermore, the following condition can be satisfied: 0.650 μm ≤ D50f ≤ 0.750 μm.

According to the composition of the present disclosure, when a D50 particle size of the lithium-titanium composite oxide is D50lt, the following condition can be satisfied: 5.000 μm ≤ D50lt ≤ 20.000 μm. Therefore, the chemical activity of the lithium-titanium composite oxide can be optimized by designing the lithium-titanium composite oxide with a specific particle size, which is favorable for improving the battery life. Furthermore, the following condition can be satisfied: 3.000 μm ≤ D50lt ≤ 25.000 μm. Furthermore, the following condition can be satisfied: 8.000 μm ≤ D50lt ≤ 18.000 μm. Furthermore, the following condition can be satisfied: 10.000 μm ≤ D50lt ≤ 16.000 μm. Furthermore, the following condition can be satisfied: 12.000 μm ≤ D50lt ≤ 14.000 μm. Furthermore, the following condition can be satisfied: 12.500 μm ≤ D50lt ≤ 13.500 μm.

According to the composition of the present disclosure, when a D50 particle size of the niobium-titanium composite oxide is D50tn, the following condition can be satisfied: 3.000 μm ≤ D50tn ≤ 10.000 μm. Therefore, the chemical activity of the niobium-titanium composite oxide can be optimized by designing the niobium-titanium composite oxide with a specific particle size, which is favorable for improving the battery life. Furthermore, the following condition can be satisfied: 5.000 μm ≤ D50tn ≤ 9.000 μm. Furthermore, the following condition can be satisfied: 6.000 μm ≤ D50tn ≤ 8.000 μm. Furthermore, the following condition can be satisfied: 6.500 μm ≤ D50tn ≤ 7.000 μm. Furthermore, the following condition can be satisfied: 6.700 μm ≤ D50tn ≤ 6.900 μm.

According to the present disclosure, the composition can be an active composition, which can be composed of an active material. The composition can include an oxide and a composite oxide. The oxide refers to an oxide whose chemical structure is a single element, and the oxide can be a metal oxide or a non-metal oxide. The composite oxide refers to an oxide whose chemical structure has two or more elements, and the composite oxide can be a composite metal oxide containing two or more metal elements.

According to the present disclosure, the metal oxide can include an iron oxide, a manganese oxide, a tin oxide, a nickel oxide, a titanium oxide, a cobalt oxide, a lithium oxide and a copper oxide, wherein the iron oxide can include a ferrous oxide (FeO), a ferric oxide ($Fe_2O_3$) and a triiron tetraoxide ($Fe_3O_4$), etc.

According to the present disclosure, the composite metal oxide can include a lithium-titanium composite oxide, a niobium-titanium composite oxide and a lithium-niobium composite oxide.

According to the present disclosure, the niobium-titanium composite oxide can include a non-doped niobium-titanium composite oxide and a doped niobium-titanium composite oxide. A constitution of the non-doped niobium-titanium composite oxide includes at least a niobium element, a titanium element and an oxygen element. The niobium-titanium composite oxide includes a plurality of compounds, which can be further represented by the following chemical formula:

$$Ti_xNb_yO_z;$$

wherein $z \leq 4x+5y$, such as $TiNb_2O_7$, $Ti_2Nb_{10}O_{29}$, $TiNb_{14}O_{37}$ and $TiNb_{24}O_{62}$. A crystal structure of the niobium-titanium composite oxide can be a cubic crystal system, a monoclinic crystal system, an orthorhombic crystal system, a $ReO_3$-type lattice or a layered structure, etc. The doped niobium-titanium composite oxide can be selected at least one compound from the aforementioned non-doped niobium-titanium composite oxides, and the at least one compound is doped with at least one doped element. The doped element can be further represented by the following chemical formula:

$$Ti_{(x-a)}M1_aNb_{(y-b)}M2_bO_{(z-c)}M3_c;$$

wherein M1, M2 and M3 are the doped elements, $0 \leq a < x$, $0 \leq b < y$, and $0 \leq c < z$. The change of the structure can be achieved by adjusting the doped elements or the doped ratio. Further, at least one of the auxiliary materials can be further selected to cover or fill a surface or pores of the niobium-titanium composite oxide.

According to the present disclosure, the lithium-titanium composite oxide can include a non-doped lithium-

titanium composite oxide and a doped lithium-titanium composite oxide. A constitution of the non-doped lithium-titanium composite oxide includes at least a lithium element, a titanium element and an oxygen element. The lithium-titanium composite oxide includes a plurality of compounds, such as $Li_4Ti_5O_{12}$, $LiTi_2O_4$, $Li_2Ti_3O_7$ and $Li_2TiO_3$. The doped lithium-titanium composite oxide can be selected at least one compound from the aforementioned non-doped lithium-titanium composite oxides, and the at least one compound is doped with at least one doped element. The change of the structure can be achieved by adjusting the doped elements or the doped ratio. Further, at least one of the auxiliary materials can be further selected to cover or fill a surface or pores of the lithium-titanium composite oxide.

According to the present disclosure, the observed particle size is obtained by observing a top view plane of the composition by an electron microscope, wherein the direction perpendicular to the top view plane is set, the particles of complete imaging are selected as a priority, and the maximum length of a single particle in the top view plane is measured.

According to the present disclosure, the average of the observed particle size is obtained by averaging at least five observed particle sizes data.

According to the present disclosure, the cumulative particle size represents the distribution of various particle sizes in the object under test. The cumulative particle size distribution can be obtained according to the distribution proportion of each particle size and the cumulative percentage based on the volume. For example, the particle size of the distribution proportion of the cumulative particle size reaching 50% is defined as D50, and it can be illustrated that 50% of the particles in the object under test have a particle size smaller than D50. The definitions of D10 and D90 can be known accordingly. Unless otherwise specified, D50 is used as the standard for determining the particle size, and the cumulative particle size of the object under test can be measured by the laser analyzer or the dynamic light scattering device.

According to the present disclosure, the laser analyzer can use the Malvern mastersizer 3000+ to measure the particle size larger than the range of the wavelength of the incident light, wherein the diffraction angle of the large particles is small, while the diffraction angle of the small particles is large. The particle size is analyzed by arranging the plural detectors at different angles to collect the light and analyze the scattering phenomenon of the micron-sized particles.

According to the present disclosure, the dynamic light scattering device can measure the amplitude corresponding to the time of the scattering light from the particles undergoing the Brownian motion by dynamic light scattering to determine the particle size and the particle size distribution thereof. The particle size can be calculated by the Stokes-Einstein equation, which is shown as follows:

$$D = kT/(3\pi\eta Df);$$

wherein D is the particle size (the unit is m), k is a Boltzmann constant (the unit is J/K), T is an absolute temperature (the unit is K), $\eta$ is a viscosity of the solvent (the unit is $kg\times m^{-1}\times s^{-1}$), and Df is a diffusion coefficient (the unit is $m^2\times s^{-1}$).

According to the present disclosure, the weight percentage of each component refers that the weight percentage of the component in the composition, or the weight percentage of each component when assembled into the electrode or the battery at full charge (100% charge).

According to the present disclosure, the active material can refer that the active material participates in the oxidation-reduction reaction within the working voltage range of the battery. The identification of the material as the active material can be determined by using the differential capacity analysis (DCA) of voltage-electric quantity curve with a constant current charge and discharge. If the object under test is the active material, it includes an oxidation peak or a reduction peak within the working voltage range.

Each of the aforementioned features of the composition of the present disclosure can be utilized in various combinations for achieving the corresponding effects.

According to further another embodiment of the present disclosure, an electrode includes the composition according to the aforementioned aspect, a conductive additive and an adhesive.

According to the electrode of the present disclosure, when a weight percentage of the composition in the electrode is Wc, a weight percentage of the conductive additive in the electrode is Wca, the following condition can be satisfied: $1.50 \leq Wc/Wca \leq 10.00$. Therefore, the capacity and the conductivity of the electrode are balanced by designing the appropriate ratio of the composition and the conductive additive. Furthermore, the following condition can be satisfied: $1.00 < Wc/Wca \leq 20.00$. Furthermore, the following condition can be satisfied: $1.20 \leq Wc/Wca \leq 15.00$. Furthermore, the following condition can be satisfied: $2.00 \leq Wc/Wca \leq 7.50$. Furthermore, the following condition can be satisfied: $2.50 \leq Wc/Wca \leq 5.00$. Furthermore, the following condition can be satisfied: $2.90 \leq Wc/Wca \leq 3.30$.

According to the electrode of the present disclosure, when the weight percentage of the composition in the electrode is Wc, the weight percentage of the conductive additive in the electrode is Wca, a weight percentage of the adhesive in the electrode is Wa, the following condition can be satisfied: $3.00 \leq (Wc+Wca)/Wa \leq 10.00$. Therefore, the secure bond of the electrode conductive material can be ensured by designing the ratio of total amount of the specific composition and the conductive additive to the adhesive, which meets the conductivity requirement of the electrode. Furthermore, the following condition can be satisfied: $1.00 \leq (Wc+Wca)/Wa \leq 20.00$. Furthermore, the following condition

can be satisfied: $2.00 \leq (Wc+Wca)/Wa \leq 15.00$. Furthermore, the following condition can be satisfied: $4.00 \leq (Wc+Wca)/Wa \leq 8.00$. Furthermore, the following condition can be satisfied: $5.00 \leq (Wc+Wca)/Wa \leq 6.00$.

According to the electrode of the present disclosure, when a density of the electrode is DSet, the following condition can be satisfied: $1.00\ g/cm^3 \leq DSet \leq 2.50\ g/cm^3$. Therefore, the decline of the conductivity that caused by the insufficient adhesion of each components can be avoided, and the structural rupture of each components that caused by the excessive compression also can be avoided by designing the electrode with the appropriate density. Furthermore, the following condition can be satisfied: $1.05\ g/cm^3 \leq DSet \leq 2.00\ g/cm^3$. Furthermore, the following condition can be satisfied: $1.08\ g/cm^3 \leq DSet \leq 1.80\ g/cm^3$. Furthermore, the following condition can be satisfied: $1.10\ g/cm^3 \leq DSet \leq 1.60\ g/cm^3$. Furthermore, the following condition can be satisfied: $1.12\ g/cm^3 \leq DSet \leq 1.40\ g/cm^3$. Furthermore, the following condition can be satisfied: $1.15\ g/cm^3 \leq DSet \leq 1.30\ g/cm^3$.

According to the electrode of the present disclosure, when a resistance of the electrode is Ret, the following condition can be satisfied: $0.3\ m\Omega \leq Ret \leq 2.0\ m\Omega$. Therefore, the current on the electrode can be limited to the optimal value by designing the appropriate resistance of the electrode, which is favorable for improving the stability of the battery. Furthermore, the following condition can be satisfied: $0.5\ m\Omega \leq Ret \leq 1.8\ m\Omega$. Furthermore, the following condition can be satisfied: $0.8\ m\Omega \leq Ret \leq 1.2\ m\Omega$. Furthermore, the following condition can be satisfied: $0.9\ m\Omega \leq Ret \leq 1.1\ m\Omega$.

According to the present disclosure, the electrode can include the composition and the auxiliary material, and the electrode can be a cathode or an anode.

According to the present disclosure, the current collector can be a substrate made of a metal foil or a conductive polymer, wherein the metal foil can be selected from aluminum, copper, titanium, nickel, tantalum, stainless steel, or alloys composed of the aforementioned metals.

According to the present disclosure, the electrode piece can be manufactured by the methods of coating on a single layer or double layers, a vacuum coating or a composite structure.

According to the present disclosure, the weight of the electrode does not include the weight of the current collector.

According to the present disclosure, the thickness of the electrode can be obtained by measuring the thickness of the electrode piece and then deducting the thickness of the current collector.

According to the present disclosure, the density of the electrode can be obtained by cutting a circular electrode piece with a diameter of 14 mm, measuring the weight of the electrode piece and then deducting the weight of the current collector. Then, the thickness of the electrode piece and the area of the cutting circle are measured so as to obtain the volume, and the weight is divided by the volume to obtain the density of the electrode.

According to the present disclosure, the resistance of the electrode can be measured by the four-point probes resistance meter. The distance between any two of the probes adjacent thereto is 1.5 cm. During measuring, the sample under test will be lay flatted first, and the probe will contact the surface of the sample under test. The closest distance between any probe on the surface and the boundary of the sample under test should be larger than 7.5 cm.

Each of the aforementioned features of the electrode of the present disclosure can be utilized in various combinations for achieving the corresponding effects.

According to still another embodiment of the present disclosure, a battery includes the electrode according to the aforementioned aspect, a cathode and an electrolyte, wherein the electrode is an anode.

According to the battery of the present disclosure, the battery can have a first oxidation peak, a second oxidation peak, a first reduction peak and a second reduction peak. When a voltage of the first oxidation peak is Vo1, a voltage of the first reduction peak is Vr1, the following condition can be satisfied: $0.30\ V \leq |Vo1-Vr1| \leq 1.20\ V$. Therefore, it is favorable for increasing the reversibility of the electrochemical oxidation-reduction reaction by reducing the difference between the voltage of the first oxidation peak and the voltage of the first reduction peak of the anode material. Furthermore, the following condition can be satisfied: $0.10\ V \leq |Vo1-Vr1| \leq 1.50\ V$. Furthermore, the following condition can be satisfied: $0.50\ V \leq |Vo1-Vr1| \leq 1.00\ V$. Furthermore, the following condition can be satisfied: $0.70\ V \leq |Vo1-Vr1| \leq 0.90\ V$. Furthermore, the following condition can be satisfied: $0.75\ V \leq |Vo1-Vr1| \leq 0.85\ V$. Furthermore, the following condition can be satisfied: $0.78\ V \leq |Vo1-Vr1| \leq 0.82\ V$.

According to the battery of the present disclosure, when a capacity at a 10th discharge of the battery with a current of 1 C is C1V10, a capacity at a 100th discharge of the battery with the current of 1 C is C1V100, the following condition can be satisfied: $0.80 \leq C1V100/C1V10$. Therefore, the battery degradation during the short-term use can be avoided by satisfying the capacity ratio of the 100th discharge to the 10th discharge under the current of 1 C for charging and discharging. Furthermore, the following condition can be satisfied: $0.90 \leq C1V100/C1V10$. Furthermore, the following condition can be satisfied: $0.95 \leq C1V100/C1V10$. Furthermore, the following condition can be satisfied: $1.00 \leq C1V100/C1V10 \leq 2.00$. Furthermore, the following condition can be satisfied: $1.05 \leq C1V100/C1V10 \leq 1.50$. Furthermore, the following condition can be satisfied: $1.10 \leq C1V100/C1V10 \leq 1.30$.

According to the battery of the present disclosure, when the capacity at the 10th discharge of the battery with the current of 1 C is C1V10, a capacity at a 400th discharge of the battery with the current of 1 C is C1V400, the following condition can be satisfied: $0.80 \leq C1V400/C1V10$. Therefore, the battery degradation during the long-term use can be

avoided by satisfying the capacity ratio of the 400th discharge to the 10th discharge under the current of 1 C for charging and discharging. Furthermore, the following condition can be satisfied: 0.90 ≤ C1V400/C1V10. Furthermore, the following condition can be satisfied: 0.95 ≤ C1V400/C1V10. Furthermore, the following condition can be satisfied: 1.00 ≤ C1V400/C1V10 ≤ 2.00. Furthermore, the following condition can be satisfied: 1.05 ≤ C1V400/C1V10 ≤ 1.50. Furthermore, the following condition can be satisfied: 1.10 ≤ C1V400/C1V10 ≤ 1.30.

According to the battery of the present disclosure, when the capacity at the 10th discharge of the battery with the current of 1 C is C1V10, a capacity at a 500th discharge of the battery with the current of 1 C is C1V500, the following condition can be satisfied: 0.80 ≤ C1V500/C1V10. Therefore, the battery can be ensured to achieve the cycle number standard of the commercially available battery by satisfying the capacity ratio of the 500th discharge to the 10th discharge under the current of 1 C for charging and discharging. Furthermore, the following condition can be satisfied: 0.90 ≤ C1V500/C1V10. Furthermore, the following condition can be satisfied: 0.95 ≤ C1V500/C1V10. Furthermore, the following condition can be satisfied: 1.00 ≤ C1V500/C1V10 ≤ 2.00. Furthermore, the following condition can be satisfied: 1.05 ≤ C1V500/C1V10 ≤ 1.50. Furthermore, the following condition can be satisfied: 1.10 ≤ C1V500/C1V10 ≤ 1.30.

According to the battery of the present disclosure, when a number of cycles of the battery dropped to 80% of a capacity at a current of 1 C is CN80, the following condition can be satisfied: 300 ≤ CN80. Therefore, the battery can be ensured to have the long service life by satisfying the number of cycles of the battery dropped to 80% of the capacity at the current of 1 C for charging and discharging. Furthermore, the following condition can be satisfied: 350 ≤ CN80. Furthermore, the following condition can be satisfied: 400 ≤ CN80. Furthermore, the following condition can be satisfied: 500 ≤ CN80. Furthermore, the following condition can be satisfied: 600 ≤ CN80. Furthermore, the following condition can be satisfied: 700 ≤ CN80 ≤ 1000.

According to the present disclosure, the number of cycles of the battery is defined as that the battery is in a condition of a commercial product, and the first test under the aforementioned condition is taken as the first cycle of the present disclosure. One cycle is defined as completing one discharging test and one charging test, and the number of cycles is accordingly accumulated.

According to the present disclosure, the capacity of the battery can be obtained by measuring the charging capacity of the battery and the discharging capacity of the battery. The calculating method for the capacity of the battery can be divided as the volumetric capacity ($mAh/cm^3$) and the gravimetric capacity (mAh/g). The volumetric capacity means that the capacity of the battery provided by the electrode piece per cubic centimeter in a battery, and the volume of the current collector should be deducted as calculating the volumetric capacity. The gravimetric capacity means that the capacity of the battery provided by the electrode piece per gram in a battery, and the weight of the current collector should be deducted as calculating the gravimetric capacity. The electrode piece can be the cathode piece or the anode piece.

According to the present disclosure, the C-rate (C) can refer to the current of the battery being fully discharged for one hour, and C can be the unit of the charging and discharging current of the battery.

According to the present disclosure, the measuring voltage range of the battery can be selected based on the oxidation-reduction potential of the cathode and the anode to obtain the suitable voltage range. The voltage range can be selected from 0 V to 5.0 V; perfectly can be selected from 0 V to 3.0 V; and more perfectly can be selected from 1.0 V to 4.5 V.

According to the present disclosure, the capacity of the battery can be represented as CiVj, and the discharge gravimetric capacity can be represented as CiGj, wherein i represents the current for charging and discharging in unit of C, and j represents the number of cycles of charging and discharging of the battery in the current cycle.

According to the present disclosure, the Coulombic efficiency satisfied the total number of a certain percentage range can be represented as nxCyEz, wherein x represents the lower limit value of the certain percentage range, y represents the current for charging and discharging in the unit of C, and z represents the stopped cycle number of charging and discharging of the battery.

According to the present disclosure, the average of the Coulombic efficiency can be represented as aCyEz, wherein y represents the current for charging and discharging in the unit of C, and z represents the stopped cycle number of charging and discharging of the battery.

According to the present disclosure, the doped element can be any element selected from Group IA, Group IIA, Group IVB, Group VB, Group VIB, Group VIIB, Group VIIIB, Group IB, Group IIB, Group IIIA, Group IVA, Group VA, Group VIA and Group VIIA. Furthermore, it can be further selected from at least one of lithium, boron, fluorine, sodium, magnesium, aluminum, silicon, phosphorus, sulfur, chlorine, calcium, vanadium, chromium, manganese, iron, cobalt, nickel, copper, zinc, gallium, arsenic, bromine, zirconium, molybdenum, antimony, iodine, tantalum, tungsten and bismuth. By selecting the element with a high conductive property or a lighter conductive property to be doped, it is favorable for enhancing the conductive property of the doped niobium-titanium composite oxide and the lithium-titanium composite oxide, so that the fast charging performance of the battery can be strengthened and the energy density can be increased.

According to the present disclosure, the auxiliary material can include the polymer, the metal, the alloy, the non-metal oxide, the metal oxide, the fluoride, the organic compound, the conductive additive, the adhesive or the additive.

According to the present disclosure, the conductive additive can be the graphite, the conductive graphite (KS6,

SFG6), the graphene, the acetylene black, the Ketjenblack, the carbon black (Super P), the carbon nanotube (CNT), the carbon microbead, the carbon fiber, the hard carbon, the soft carbon, the aluminium powder, the nickel powder, the titanium dioxide, the potassium hexatitanate (PHT), or a combination thereof.

According to the present disclosure, the adhesive can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethlene rubber (CSM), or alginic acid made of the mono alduronic acid by linear polymerization.

According to the present disclosure, the cathode can be a lithium metal or a lithium composite metal oxide including at least one metal element, such as lithium iron phosphate ($LiFePO_4$), lithium manganese oxide ($LiMnO_2$, $LiMn_2O_4$), lithium cobalt oxide ($LiCoO_2$), lithium nickel oxide ($LiNiO_2$), lithium nickel cobalt oxide ($LiNiCoO_2$), lithium nickel manganese oxide ($LiNiMnO_4$), lithium manganese cobalt oxide ($LiCoMnO_2$, $LiCoMnO_4$), lithium nickel manganese cobalt oxide ($LiNiCoMnO_2$, $LiNiCoMnO_4$), or a combination thereof. The aforementioned lithium composite metal oxide can include various different oxidation states.

According to the present disclosure, the electrolyte can be composed of the metal salt, the additive and the organic solvent. The composition ratio of the organic solvent is larger than the composition ratio of the additive, and the state of the electrolyte can be liquid, colloidal or solid. The additive and the organic solvent as the electrolyte can be mixed physically, or at least one of the following additives or the organic solvent monomers can be selected as a precursor for polymerization.

According to the present disclosure, the metal salt can include the inorganic acid lithium salt such as $LiPF_6$, $LiBF_4$, $LiSbF_6$, $LiAsF_6$, $LiClO_4$, $LiC_4BO_8$, LiTFSI, LiFSI, $LiNO_3$, $LiGaCl_4$; the lithium sulfonate salt including fluorine such as $LiCF_3SO_3$, $LiN(C_2F_5SO_2)_2$, $LiN(CF_3SO_2)_2$, $LiC(CF_3SO_2)_3$; and $LiBF_2(C_2O_4)$ (LiDFOB), $LiB(C_2O_4)_2$ (LiBOB), or a combination thereof. The aforementioned metal salt can include various different oxidation states.

According to the present disclosure, the organic solvent can be the carbonate ester, the carboxylate ester, the ether, the sulfide, or a combination thereof. The aforementioned organic solvent can also be used as the additive.

According to the present disclosure, the additive can be the carbonate ester compound, the lactone cyclic ester, the cyclic compound including the ether group, the aromatic compound, the phosphorus-containing compound, the boron-containing compound, the inorganic oxide, or a combination thereof. The additive with a proper amount is added, it is favorable for enhancing the efficacy of the battery. For example, improving the composition of the SEI membrane, enhancing the efficacy under high temperature and high voltage, enhancing the transmission ability of the ions, reducing the impedance of the electrolyte, increasing the stability of cycles, stabilizing the integrity of the cathode and the anode, increasing the electrochemical stability, etc.

According to the present disclosure, the structure of the organic solvent including the polymerizable olefin group, which can be used as the monomer of the second structural precursor. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene-1,1-dioxide, 1-ethenylsulfonylethene, prop-1-ene-1,3-sultone, the additive of cyclic compound including the ether group, or the additive of aromatic compound.

According to the present disclosure, the carbonate ester organic solvent can be a compound in which some or all of the hydrogens of the hydroxyl group in the carbonic acid molecule are substituted by an alkyl group, and the carbonate ester organic solvent can be divided to the cyclic carbonate ester and the linear carbonate ester. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

According to the present disclosure, the carboxylic acid ester organic solvent can be manufactured by the esterification reaction of the alcohol and the carboxyl acid, and the carboxylic acid ester organic solvent can be methyl acetate, ethyl acetate, propyl acetate, methyl propionate, ethyl propionate, propyl propionate, methyl butyrate, ethyl butyrate, lactone, or a combination thereof. The lactone can further explained as containing a 1-oxacycloalkan-2-one structure, which refers the compound including a hydroxyl group and a carboxylic acid, and the compound is condensed within the molecule so as to form a cyclic carboxylic acid ester monomer. According to the position of the hydroxyl group forming the ring and the number of carbon atoms in the ring, there can be many combinations, such as oxiran-2-one ($\alpha$-acetolactone), oxetan-2-one ($\beta$-propiolactone), oxolan-2-one ($\gamma$-butyrolactone), 5-methyloxolan-2-one ($\gamma$-valerolactone), oxan-2-on ($\sigma$-valerolactone), 5-ethyloxolan-2-one ($\gamma$-caprolactone), oxepan-2-one ($\varepsilon$-caprolactone), D-glucono-1,5-lactone ($\delta$-gluconolactone), or a combination thereof.

According to the present disclosure, the ether organic solvent can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG),or a combination thereof.

According to the present disclosure, the organic solvent including sulfide can be divided into the compound including sulfone group (-(O=)S(=O)-) or the compound including sulfonate group ($-SO_2O^-$). The compound including sulfone group can include 2,5-dihydrothiophene-1,1-dioxide and 1-ethenylsulfonylethene. The compound including sulfonate group can be further divided into mesylate ($CH_3SO_2O^-$), trifluoromethanesulfonate ($CF_3SO_2O^-$), p-toluenesulfonyl group (Tosyl), and can include 1-methylsulfonyloxyethane, methyl 4-methylbenzenesulfonate, oxathiolane 2,2-dione, prop-1-ene-1,3-sultone, 1,3,2-dioxathiane 2,2-dioxide, or a combination thereof.

According to the present disclosure, the lactone cyclic ester can be a polycyclic diester monomer obtained by the esterification condensation of two identical or two different compounds including the hydroxyl acid, and the lactone cyclic ester can include 1,4-dioxane-2,5-dione (glycolide), 3,6-dimethyl-1,4-dioxane-2,5-dione (lactide), or a combination thereof. Further, according to the stereoisomer formed based on differences in the spatial arrangement of atoms, the lactide can be further divided to (R,R)-3,6-dimethyl-1,4-dioxane-2,5-dione (LL-lactide), (S,S)-3,6-dimethyl-1,4-dioxane-2,5-dione (DD-lactide), (meso)-3,6-dimethyl-1,4-dioxane-2,5-dione (DL-lactide). Further, the lactide also can be formed by the carboxylic acid compound including hydroxyl group, wherein the carboxylic acid compound can be directly copolymerized to form the polymer without ring-opening reaction, and the lactide can include 2-hydroxyacetic acid (glycolic acid), 3-hydroxypropanoic acid (lactic acid), 4-hydroxybutanoic acid, 5-hydroxyvaleric acid, or a combination thereof.

According to the present disclosure, the ether group-containing cyclic compound additive can be crown ether, wherein the crown ether is using the ethyleneoxy group ($-CH_2CH_2O-$) as the main repeating unit structure, and can include 1,4,7-trioxonane (9-Crown-3), 1,4,7,10-tetraoxacyclododecane (12-Crown-4), 1,4,7,10,13-pentaoxacyclopentadecane (15-Crown-5), 1,4,7,10,13,16-hexaoxacyclooctadecane (18-Crown-6), 1,4,7,10,13,16,19-heptaoxacycloheneicosane (21-Crown-7), 6,7,9,10,17,18,20,21-octahydrodibenzo[b,k][1,4,7,10,13,16]hexaoxacyclooctade cine (dibenzo-18-crown-6), 1,4,10,13-tetraoxa-7,16-diazacyclooctadecane (diaza-18-crown-6), or a combination thereof.

According to the present disclosure, the aromatic compound additive can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline, or a combination thereof.

According to the present disclosure, the phosphorus-containing compound additive can be tris(trimethylsilyl) phosphite (TMSPi), tris(2,2,2-trifluoroethyl) phosphite, triphenyl phosphite, 1,3,5,2,4,6-triazatriphosphorine (2-ethoxy-2,4,4,6,6-pentafluoro-2,2,4,4,6,6-hexahydro-), or a combination thereof.

According to the present disclosure, the boron-containing compound additive can be trimethyl borate, tris(trimethylsilyl) borate, 2,4,6-trimethyl-1,3,5,2,4,6-trioxatriborinane, or a combination thereof.

According to the present disclosure, the inorganic oxide additive can be the composite material, such as lithium lanthanum zirconium oxide (LiLaZrO), lithium lanthanum zirconium tantalum oxide (LiLaZrTaO), lithium lanthanum titanium oxide (LiLaTiO), lithium phosphate (LiPO), lithium fluorinated phosphate (LiPOF), lithium titanium phosphate (LiTiPO), lithium aluminum germanium phosphate (LiAlGeP), lithium aluminum titanium phosphate oxide (LiAlTiPO), lithium germanium phosphorus sulfur oxide (LiGePSO), lithium tin phosphorous sulfur oxide (LiSnPSO), lead zirconium titanium oxide (PbZrTiO), lead lanthanum zirconium titanium oxide (PbLaZrTiO), barium titanium oxide (BaTiO), etc. The aforementioned inorganic oxide additive can include various different oxidation states, or can be $Al_2O_3$, $TiO_2$, $SiO_2$, $SnO_2$, NiO, ZnO, CaO, MgO, $ZrO_2$, $CeO_2$, $Y_2O_3$, etc., so that it is favorable for reducing the degree of crystallinity of the electrolyte with high molecular weight so as to increase the conductivity of ions and the physical and mechanical properties of the electrolyte. Thus, the cycle life of the battery can be enhanced.

According to the present disclosure, the separator can be a thin film having the porous structure, and the separator can be a single layer film or multiple layers film containing polyolefin, polyamide, polyester, such as polyethylene (PE), polypropylene (PP), polyethylene terephthalate (PET), acrylonitrile butadiene styrene copolymer (ABS), epoxy resin. The surface thereof can include an inorganic ceramic composite film, such as at least one of $Mg(OH)_2$, MgO, $BaSO_4$, $SnO_2$, NiO, CaO, $Al_2O_3$, ZnO, $SiO_2$, $TiO_2$, or a combination thereof. The aforementioned inorganic ceramic composite film can include many various different oxidation states.

According to the present disclosure, the differential capacity analysis (DCA) of the charging and discharging voltage-electric quantity with a constant current can be used to determine the optimal voltage range during the oxidation-reduction of the object under test. The constant current is set as 1 C for charging or discharging, and the working voltage range for charging and discharging is set as 0.00 V to 5.00 V (vs $Li^+/Li$). The voltage-electric quantity curve data of the first charging and discharging of the object under test are taken respectively to perform a linear differential to the voltage, and a graph is drawn with the x-axis as the voltage (V vs $Li^+/Li$) and the y-axis as dQ/dV (mAh/V) so as to obtain a diagram of charging and discharging voltage-electric quantity differential curve with the constant current. The optimal voltage and peak value of the oxidation peak of the object under test can be observed by the linear differential of the charging curve, and

the optimal voltage and peak value of the reduction peak of the object under test can be observed by the linear differential of the discharging curve. The determining standard of the oxidation peak is described as follows. The charging voltage-electric quantity curve data is taken to perform a cubic differential to the voltage so as to obtain a cubic differential data of the charging curve. The voltage corresponding to the peak value smaller than -5 ($mAh/V^3$) set in the cubic differential data of the charging curve is regarded as the oxidation peak voltage. The voltage corresponding to the smallest peak value is set as the first oxidation peak voltage, and the peak value corresponding to the first oxidation peak voltage in the linear differential data of the charging curve is set as the peak value of the first oxidation peak. The voltage corresponding to the second smallest peak value is set as the second oxidation peak voltage, and the peak value corresponding to the second oxidation peak voltage in the linear differential data of the charging curve is set as the peak value of the second oxidation peak. The determining standard of the reduction peak is described as follows. The discharging voltage-electric quantity curve data is taken to perform a cubic differential to the voltage so as to obtain a cubic differential data of the discharging curve. The voltage corresponding to the peak value larger than 5 ($mAh/V^3$) set in the cubic differential data of the discharging curve is regarded as the reduction peak voltage. The voltage corresponding to the largest peak value is set as the first reduction peak voltage, and the peak value corresponding to the first reduction peak voltage in the linear differential data of the discharging curve is set as the peak value of the first reduction peak. The voltage corresponding to the second largest peak value is set as the second reduction peak voltage, and the peak value corresponding to the second reduction peak voltage in the linear differential data of the discharging curve is set as the peak value of the second reduction peak.

According to the present disclosure, the electrochemical stability is measured by the linear sweep voltammetry (LSV). The scanning speed is 0.1 V/s and it is repeatedly tested under the condition of the $Li/Li^+$ relative voltage between -5.00 V to 5.00 V, and the results of the corresponding changes in the relationship between current and voltage can be obtained.

According to the present disclosure, the roughness is an arithmetical mean height of the surface of the surface characteristic parameter Sa (μm) according to ISO 251781. The area of the region for measuring the roughness is set to be at least larger than 10000 $\mu m^2$. The average height of the surface is the arithmetical mean number of the height of each point Z(x,y) in the area of the region. Sa is the average value of the absolute values of the difference between each point Z(x,y) in the area of the region and the average height of the surface according to the following equation:

$$\mathrm{Sa} = \frac{1}{A}\iint_A |Z(x,y) - h|\,dxdy$$

wherein A is the area of the region ($\mu m^2$), and h is the average height of the surface (μm).

According to the present disclosure, the conductivity is measured by the electrochemical impedance spectroscopy (EIS) method, wherein the alternating current with 1 Hz to 100 Hz and the amplitude of 50 mV is applied to the polymer or the electrolyte so as to measure the resistor value. Then, the conductivity is calculated by the following equation:

$$Ci = (1/R) \times (L/A);$$

wherein Ci ($S \times cm^{-1}$) is the conductivity, R (Ω) is the resistance value, L (cm) is the distance between two electrodes, and A ($cm^2$) is the sectional area of the object under test and the electrode, wherein (L/A) can be defined as the conductivity parameter ($cm^{-1}$).

According to the present disclosure, the battery assembly can include a battery case, a spring, a spacer, a lid, a tab or a cap.

According to the present disclosure, the bipolar battery can include an electrode piece of the bipolar battery and an electrolyte. One side of the electrode piece of the bipolar battery is the cathode, and the other side of the electrode piece of the bipolar battery is the anode. The two electrode pieces of the bipolar battery are connected through the electrolyte (the electrolyte contacts the cathode of one bipolar battery electrode piece and the anode of another bipolar battery electrode piece) to form the bipolar battery unit, and a plurality of the bipolar battery units are connected in series to form the bipolar battery.

According to the present disclosure, the battery pack can be a primary cell or a secondary cell. The electrochemical carrier of the primary cell or the secondary cell can be at least one of a button type carrier, a winding type carrier or a stacking type carrier. **It** can be applied to the portable electronic product, such as the digital camera, the mobile phone, the notebook computer, the console handle and the other designs which need to be light and thin, or applied to the power storage industries with large-scale, such as the light electric vehicle and the electric vehicle.

Each of the aforementioned features of the battery of the present disclosure can be utilized in various combinations for achieving the corresponding effects.

All the arrangements of the composition of the present disclosure can be made into the compositions according to the related materials or the related ratios, the electrodes can be made according to the related materials or the related ratios, and the batteries can be made according to the related materials or the related ratios and then performed by the charging and discharging test. The present disclosure only shows some of the relevant arrangements, and that which is without the data or cannot be calculated are marked with "-" in the tables.

The measurement environment of the present disclosure is 1 atm, 25°C of temperature and 50% of humidity unless otherwise specified.

According to the above descriptions, the specific embodiments are given below so as to describe the present disclosure in detail.

<Comparative example 1>

The composition of Comparative example 1 includes a metal oxide, the metal oxide is an iron oxide, but the composition of Comparative example 1 does not include a composite metal oxide.

The detail data of the composition, the electrode and the battery of Comparative example 1 are shown in Table 1.

<table>
<tr><th colspan="7">Table 1</th></tr>
<tr><td rowspan="29">Composition</td><td rowspan="9">Metal oxide</td><td colspan="4">Material</td><td>Triiron tetraoxide</td></tr>
<tr><td colspan="2" rowspan="5">Observed particle size (μm)</td><td colspan="2">1</td><td>0.531</td></tr>
<tr><td colspan="2">2</td><td>0.688</td></tr>
<tr><td colspan="2">3</td><td>0.715</td></tr>
<tr><td colspan="2">4</td><td>0.395</td></tr>
<tr><td colspan="2">5</td><td>0.705</td></tr>
<tr><td colspan="4">Average of observed particle size (μm)</td><td>0.607</td></tr>
<tr><td colspan="4">D50 particle size (μm)</td><td>-</td></tr>
<tr><td colspan="4">Weight percentage (%)</td><td>100.00</td></tr>
<tr><td rowspan="18">Complex metal oxide</td><td rowspan="9">1</td><td colspan="3">Material</td><td>-</td></tr>
<tr><td rowspan="5">Observed particle size (μm)</td><td colspan="2">1</td><td>-</td></tr>
<tr><td colspan="2">2</td><td>-</td></tr>
<tr><td colspan="2">3</td><td>-</td></tr>
<tr><td colspan="2">4</td><td>-</td></tr>
<tr><td colspan="2">5</td><td>-</td></tr>
<tr><td colspan="3">Average of observed particle size (μm)</td><td>-</td></tr>
<tr><td colspan="3">D5 particle size (μm)</td><td>-</td></tr>
<tr><td colspan="3">Weight percentage (%)</td><td>-</td></tr>
<tr><td rowspan="9">2</td><td colspan="3">Material</td><td>-</td></tr>
<tr><td rowspan="5">Observed particle size (μm)</td><td colspan="2">1</td><td>-</td></tr>
<tr><td colspan="2">2</td><td>-</td></tr>
<tr><td colspan="2">3</td><td>-</td></tr>
<tr><td colspan="2">4</td><td>-</td></tr>
<tr><td colspan="2">5</td><td>-</td></tr>
<tr><td colspan="3">Average of observed particle size (μm)</td><td>-</td></tr>
<tr><td colspan="3">D50 particle size (μm)</td><td>-</td></tr>
<tr><td colspan="3">Weight percentage (%)</td><td>-</td></tr>
<tr><td colspan="3" rowspan="2">Observed particle size of iron oxide (μm)</td><td rowspan="2">SDf</td><td>1</td><td>0.531</td></tr>
<tr><td>2</td><td>0.688</td></tr>
</table>

| | | | | |
|---|---|---|---|---|
| | | | 3 | 0.715 |
| | | | 4 | 0.395 |
| | | | 5 | 0.705 |
| | Average of observed particle size of iron oxide (μm) | aSDf | | 0.607 |
| | Observed particle size of lithium-titanium composite oxide (μm) | SDlt | 1 | - |
| | | | 2 | - |
| | | | 3 | - |
| | | | 4 | - |
| | | | 5 | - |
| | Average of observed particle size of lithium-titanium composite oxide (μm) | aSDlt | | - |
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 100.00 |
| | Weight percentage of lithium-titanium composite oxide in composition (%) | Wlt | | - |
| | Weight percentage of niobium-titanium composite oxide in composition (%) | Wtn | | - |
| | Wf/Wlt | | | - |
| | Wf/Wtn | | | - |
| | Wlt/Wtn | | | - |
| | Wf/(Wlt+Wtn) | | | - |
| Electrode | Weight percentage of composition in electrode (%) | Wc | | 65.00 |
| | Weight percentage of conductive additive in electrode (%) | Wca | | 20.00 |
| | Weight percentage of adhesive in electrode (%) | Wa | | 15.00 |
| | Wc/Wca | | | 3.25 |
| | (Wc+Wca)/Wa | | | 5.67 |
| | Density (g/m$^3$) | DSet | | 1.79 |
| | Resistance (mΩ) | Ret | | 0.99 |
| | Thickness of electrode (μm) | | | 15.00 |

| | | | | |
|---|---|---|---|---|
| Battery | First oxidation peak | Voltage (V) | Vo1 | 1.68 |
| | | Peak value (mAh/V) | Io1 | 1.20 |
| | First reduction peak | Voltage (V) | Vr1 | 0.96 |
| | | Peak value (mAh/V) | Ir1 | -5.78 |
| | Coulombic efficiency of 1st cycle (%) | | | 72.00 |
| | \|Vo1-Vr1\| (V) | | | 0.71 |
| | Capacity at 10th discharge with current of 1 C (mAh/g) | | C1V10 | 452.08 |
| | Capacity at 100th discharge with current of 1 C (mAh/g) | | C1V100 | 460.41 |
| | Capacity at 400th discharge with current of 1 C (mAh/g) | | C1V400 | 44.01 |
| | Capacity at 500th discharge with current of 1 C (mAh/g) | | C1V500 | 37.85 |
| | C1V100/C1V10 | | | 1.02 |
| | C1V400/C1V10 | | | 0.10 |
| | C1V500/C1V10 | | | 0.08 |
| | Number of cycles dropped to 80% capacity with current of 1 C | | CN80 | 285 |

<Example 1>

The composition of Example 1 includes a metal oxide and two composite metal oxides, wherein each of the metal oxide and the two composite metal oxides is an active material. The metal oxide is an iron oxide, and the iron oxide is a triiron tetraoxide. Two composite metal oxides are a lithium-titanium composite oxide and a niobium-titanium composite oxide, respectively.

The detail data of the composition, the electrode and the battery of Example 1 are shown in Table 2.

| Table 2 | | | | |
|---|---|---|---|---|
| Composition | Metal oxide | Material | | Triiron tetraoxide |
| | | Observed particle size (μm) | 1 | - |
| | | | 2 | - |
| | | | 3 | - |
| | | | 4 | - |
| | | | 5 | - |
| | | Average of observed particle size (μm) | | - |
| | | D50 particle size (μm) | | - |
| | | Weight percentage (%) | | 20.00 |

| | | | | | |
|---|---|---|---|---|---|
| | Complex metal oxide | 1 | Material | | Lithium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 40.00 |
| | | 2 | Material | | Niobium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 40.00 |
| | Observed particle size of iron oxide (μm) | | SDf | 1 | - |
| | | | | 2 | - |
| | | | | 3 | - |
| | | | | 4 | - |
| | | | | 5 | - |
| | Average of observed particle size of iron oxide (μm) | | aSDf | | - |
| | Observed particle size of lithium-titanium composite oxide (μm) | | SDlt | 1 | - |
| | | | | 2 | - |
| | | | | 3 | - |
| | | | | 4 | - |
| | | | | 5 | - |
| | Average of observed particle size of lithium-titanium composite oxide (μm) | | aSDlt | | - |
| | Observed particle size of niobium-titanium composite oxide (μm) | | SDtn | 1 | - |
| | | | | 2 | - |
| | | | | 3 | - |
| | | | | 4 | - |
| | | | | 5 | - |
| | Average of observed particle size of niobium-titanium composite oxide (μm) | | aSDtn | | - |
| | D50 particle size of iron oxide (μm) | | D50f | | - |
| | D50 particle size of lithium-titanium composite oxide (μm) | | D50lt | | - |
| | D50 particle size of niobium-titanium composite oxide (μm) | | D50tn | | - |
| | Weight percentage of iron oxide in composition (%) | | Wf | | 20.00 |

| | | | | |
|---|---|---|---|---|
| | Weight percentage of lithium-titanium composite oxide in composition (%) | | Wlt | 40.00 |
| | Weight percentage of niobium-titanium composite oxide in composition (%) | | Wtn | 40.00 |
| | Wf/Wlt | | | 0.50 |
| | Wf/Wtn | | | 0.50 |
| | Wlt/Wtn | | | 1.00 |
| | Wf/(Wlt+Wtn) | | | 0.25 |
| Electrode | Weight percentage of composition in electrode (%) | | Wc | 65.00 |
| | Weight percentage of conductive additive in electrode (%) | | Wca | 20.00 |
| | Weight percentage of adhesive in electrode (%) | | Wa | 15.00 |
| | Wc/Wca | | | 3.25 |
| | (Wc+Wca)/Wa | | | 5.67 |
| | Density (g/m$^3$) | | DSet | 1.15 |
| | Resistance (mΩ) | | Ret | 1.21 |
| | Thickness of electrode (μm) | | | 23.0 |
| Battery | First oxidation peak | Voltage (V) | Vo1 | 1.66 |
| | | Peak value (mAh/V) | Io1 | 17.30 |
| | First reduction peak | Voltage (V) | Vr1 | 0.88 |
| | | Peak value (mAh/V) | Ir1 | -1.85 |
| | Coulombic efficiency of 1st cycle (%) | | | 94.00 |
| | \|Vo1-Vr1\| (V) | | | 0.78 |
| | Capacity at 10th discharge with current of 1 C (mAh/g) | | C1V10 | 301.73 |
| | Capacity at 100th discharge with current of 1 C (mAh/g) | | C1V100 | 332.47 |
| | Capacity at 400th discharge with current of 1 C (mAh/g) | | C1V400 | 357.67 |
| | Capacity at 500th discharge with current of 1 C (mAh/g) | | C1V500 | 348.60 |
| | C1V100/C1V10 | | | 1.10 |
| | C1V400/C1V10 | | | 1.19 |
| | C1V500/C1V10 | | | 1.16 |
| | Number of cycles dropped to 80% capacity with current of 1 C | | CN80 | 413 |

<Example 2>

The composition of Example 2 includes a metal oxide and two composite metal oxides, wherein each of the metal oxide and the two composite metal oxides is an active material. The metal oxide is an iron oxide, and the iron oxide is a triiron tetraoxide. Two composite metal oxides are a lithium-titanium composite oxide and a niobium-titanium composite oxide, respectively.

The detail data of the composition, the electrode and the battery of Example 2 are shown in Table 3.

<table>
<tr><th colspan="7">Table 3</th></tr>
<tr><td rowspan="35">Composition</td><td rowspan="9">Metal oxide</td><td colspan="4">Material</td><td>Triiron tetraoxide</td></tr>
<tr><td colspan="2" rowspan="5">Observed particle size (µm)</td><td colspan="2">1</td><td>-</td></tr>
<tr><td colspan="2">2</td><td>-</td></tr>
<tr><td colspan="2">3</td><td>-</td></tr>
<tr><td colspan="2">4</td><td>-</td></tr>
<tr><td colspan="2">5</td><td>-</td></tr>
<tr><td colspan="4">Average of observed particle size (µm)</td><td>-</td></tr>
<tr><td colspan="4">D50 particle size (µm)</td><td>-</td></tr>
<tr><td colspan="4">Weight percentage (%)</td><td>33.33</td></tr>
<tr><td rowspan="18">Complex metal oxide</td><td rowspan="9">1</td><td colspan="3">Material</td><td>Lithium-titanium composite oxide</td></tr>
<tr><td rowspan="5">Observed particle size (µm)</td><td colspan="2">1</td><td>-</td></tr>
<tr><td colspan="2">2</td><td>-</td></tr>
<tr><td colspan="2">3</td><td>-</td></tr>
<tr><td colspan="2">4</td><td>-</td></tr>
<tr><td colspan="2">5</td><td>-</td></tr>
<tr><td colspan="3">Average of observed particle size (µm)</td><td>-</td></tr>
<tr><td colspan="3">D50 particle size (µm)</td><td>-</td></tr>
<tr><td colspan="3">Weight percentage (%)</td><td>33.33</td></tr>
<tr><td rowspan="9">2</td><td colspan="3">Material</td><td>Niobium-titanium composite oxide</td></tr>
<tr><td rowspan="5">Observed particle size (µm)</td><td colspan="2">1</td><td>-</td></tr>
<tr><td colspan="2">2</td><td>-</td></tr>
<tr><td colspan="2">3</td><td>-</td></tr>
<tr><td colspan="2">4</td><td>-</td></tr>
<tr><td colspan="2">5</td><td>-</td></tr>
<tr><td colspan="3">Average of observed particle size (µm)</td><td>-</td></tr>
<tr><td colspan="3">D50 particle size (µm)</td><td>-</td></tr>
<tr><td colspan="3">Weight percentage (%)</td><td>33.33</td></tr>
<tr><td colspan="3" rowspan="5">Observed particle size of iron oxide (µm)</td><td rowspan="5">SDf</td><td>1</td><td>-</td></tr>
<tr><td>2</td><td>-</td></tr>
<tr><td>3</td><td>-</td></tr>
<tr><td>4</td><td>-</td></tr>
<tr><td>5</td><td>-</td></tr>
<tr><td colspan="3">Average of observed particle size of iron oxide (µm)</td><td colspan="2">aSDf</td><td>-</td></tr>
<tr><td colspan="3" rowspan="2">Observed particle size of lithium-titanium composite oxide (µm)</td><td rowspan="2">SDlt</td><td>1</td><td>-</td></tr>
<tr><td>2</td><td>-</td></tr>
</table>

| | | | | |
|---|---|---|---|---|
| | | | 3 | - |
| | | | 4 | - |
| | | | 5 | |
| | Average of observed particle size of lithium-titanium composite oxide (μm) | aSDlt | | - |
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 33.33 |
| | Weight percentage of lithium-titanium composite oxide in composition (%) | Wlt | | 33.33 |
| | Weight percentage of niobium-titanium composite oxide in composition (%) | Wtn | | 33.33 |
| | Wf/Wlt | | | 1.00 |
| | Wf/Wtn | | | 1.00 |
| | Wlt/Wtn | | | 1.00 |
| | Wf/(Wlt+Wtn) | | | 0.50 |
| Electrode | Weight percentage of composition in electrode (%) | Wc | | 65.00 |
| | Weight percentage of conductive additive in electrode (%) | Wca | | 20.00 |
| | Weight percentage of adhesive in electrode (%) | Wa | | 15.00 |
| | Wc/Wca | | | 3.25 |
| | (Wc+Wca)/Wa | | | 5.67 |
| | Density (g/m$^3$) | DSet | | 1.22 |
| | Resistance (mΩ) | Ret | | 1.10 |
| | Thickness of electrode (μm) | | | 25.0 |
| Battery | First oxidation peak | Voltage (V) | Vo1 | 1.67 |
| | | Peak value (mAh/V) | Io1 | 21.11 |
| | First reduction peak | Voltage (V) | Vr1 | 0.88 |
| | | Peak value (mAh/V) | Ir1 | -2.75 |
| | Coulombic efficiency of 1st cycle (%) | | | 99.00 |
| | \|Vo1-Vr1\| (V) | | | 0.79 |
| | Capacity at 10th discharge with current of 1 C (mAh/g) | C1V10 | | 332.66 |

| | | | |
|---|---|---|---|
| | Capacity at 100th discharge with current of 1 C (mAh/g) | C1V100 | 174.04 |
| | Capacity at 400th discharge with current of 1 C (mAh/g) | C1V400 | - |
| | Capacity at 500th discharge with current of 1 C (mAh/g) | C1V500 | - |
| | C1V100/C1V10 | | 0.52 |
| | C1V400/C1V10 | | - |
| | C1V500/C1V10 | | - |
| | Number of cycles dropped to 80% capacity with current of 1 C | CN80 | 442 |

<Example 3>

The composition of Example 3 includes a metal oxide and two composite metal oxides, wherein each of the metal oxide and the two composite metal oxides is an active material. The metal oxide is an iron oxide, and the iron oxide is a triiron tetraoxide. Two composite metal oxides are a lithium-titanium composite oxide and a niobium-titanium composite oxide, respectively.

The detail data of the composition, the electrode and the battery of Example 3 are shown in Table 4.

Table 4

| | | | | | |
|---|---|---|---|---|---|
| Composition | Metal oxide | Material | | | Triiron tetraoxide |
| | | Observed particle size (μm) | | 1 | 0.739 |
| | | | | 2 | 0.675 |
| | | | | 3 | 0.660 |
| | | | | 4 | 0.893 |
| | | | | 5 | 0.568 |
| | | Average of observed particle size (μm) | | | 0.707 |
| | | D50 particle size (μm) | | | - |
| | | Weight percentage (%) | | | 50.00 |
| | Complex metal oxide | 1 | Material | | Lithium-titanium composite oxide |
| | | | Observed particle size (μm) | 1 | 18.062 |
| | | | | 2 | 21.035 |
| | | | | 3 | 14.245 |
| | | | | 4 | 7.128 |
| | | | | 5 | 5.251 |
| | | | Average of observed particle size (μm) | | 13.144 |

| | | | | | | |
|---|---|---|---|---|---|---|
| | | | D50 particle size (μm) | | | - |
| | | | Weight percentage (%) | | | 25.00 |
| | | 2 | Material | | | Niobium-titanium composite oxide |
| | | | Observed particle size (μm) | | 1 | 7.722 |
| | | | | | 2 | 7.978 |
| | | | | | 3 | 7.685 |
| | | | | | 4 | 4.901 |
| | | | | | 5 | 5.935 |
| | | | Average of observed particle size (μm) | | | 6.844 |
| | | | D50 particle size (μm) | | | - |
| | | | Weight percentage (%) | | | 25.00 |
| | Observed particle size of iron oxide (μm) | | | SDf | 1 | 0.739 |
| | | | | | 2 | 0.675 |
| | | | | | 3 | 0.660 |
| | | | | | 4 | 0.893 |
| | | | | | 5 | 0.568 |
| | Average of observed particle size of iron oxide (μm) | | | aSDf | | 0.707 |
| | Observed particle size of lithium-titanium composite oxide (μm) | | | SDlt | 1 | 18.062 |
| | | | | | 2 | 21.035 |
| | | | | | 3 | 14.245 |
| | | | | | 4 | 7.128 |
| | | | | | 5 | 5.251 |
| | Average of observed particle size of lithium-titanium composite oxide (μm) | | | aSDlt | | 13.144 |
| | Observed particle size of niobium-titanium composite oxide (μm) | | | SDtn | 1 | 7.722 |
| | | | | | 2 | 7.978 |
| | | | | | 3 | 7.685 |
| | | | | | 4 | 4.901 |
| | | | | | 5 | 5.935 |
| | Average of observed particle size of niobium-titanium composite oxide (μm) | | | aSDtn | | 6.844 |
| | D50 particle size of iron oxide (μm) | | | D50f | | - |
| | D50 particle size of lithium-titanium composite oxide (μm) | | | D50lt | | - |
| | D50 particle size of niobium-titanium composite oxide (μm) | | | D50tn | | - |
| | Weight percentage of iron oxide in composition (%) | | | Wf | | 50.00 |
| | Weight percentage of lithium-titanium composite oxide in composition (%) | | | Wlt | | 25.00 |
| | Weight percentage of niobium-titanium composite oxide in composition (%) | | | Wtn | | 25.00 |
| | Wf/Wlt | | | | | 2.00 |

| | | | | |
|---|---|---|---|---|
| | Wf/Wtn | | | 2.00 |
| | Wlt/Wtn | | | 1.00 |
| | Wf/(Wlt+Wtn) | | | 1.00 |
| Electrode | Weight percentage of composition in electrode (%) | | Wc | 65.00 |
| | Weight percentage of conductive additive in electrode (%) | | Wca | 20.00 |
| | Weight percentage of adhesive in electrode (%) | | Wa | 15.00 |
| | Wc/Wca | | | 3.25 |
| | (Wc+Wca)/Wa | | | 5.67 |
| | Density ($g/m^3$) | | DSet | 1.20 |
| | Resistance (mΩ) | | Ret | 0.99 |
| | Thickness of electrode (μm) | | | 21.0 |
| Battery | First oxidation peak | Voltage (V) | Vo1 | 1.65 |
| | | Peak value (mAh/V) | Io1 | 7.90 |
| | First reduction peak | Voltage (V) | Vr1 | 0.89 |
| | | Peak value (mAh/V) | Ir1 | -1.62 |
| | Coulombic efficiency of 1st cycle (%) | | | 81.00 |
| | \|Vo1-Vr1\| (V) | | | 0.76 |
| | Capacity at 10th discharge with current of 1 C (mAh/g) | | C1V10 | 313.50 |
| | Capacity at 100th discharge with current of 1 C (mAh/g) | | C1V100 | 308.03 |
| | Capacity at 400th discharge with current of 1 C (mAh/g) | | C1V400 | 337.43 |
| | Capacity at 500th discharge with current of 1 C (mAh/g) | | C1V500 | 309.70 |
| | C1V100/C1V10 | | | 0.98 |
| | C1V400/C1V10 | | | 1.08 |
| | C1V500/C1V10 | | | 0.99 |
| | Number of cycles dropped to 80% capacity with current of 1 C | | CN80 | 544 |

<Example 4>

The composition of Example 4 includes a metal oxide and two composite metal oxides, wherein each of the metal oxide and the two composite metal oxides is an active material. The metal oxide is an iron oxide, and the iron oxide is a triiron tetraoxide. Two composite metal oxides are a lithium-titanium composite oxide and a niobium-titanium composite oxide, respectively.

The detail data of the composition, the electrode and the battery of Example 4 are shown in Table 5.

Table 5

| | | | | | | |
|---|---|---|---|---|---|---|
| Composition | Metal oxide | | Material | | | Triiron tetraoxide |
| | | | Observed particle size (μm) | | 1 | - |
| | | | | | 2 | - |
| | | | | | 3 | - |
| | | | | | 4 | - |
| | | | | | 5 | - |
| | | | Average of observed particle size (μm) | | | - |
| | | | D50 particle size (μm) | | | - |
| | | | Weight percentage (%) | | | 70.00 |
| | Complex metal oxide | 1 | Material | | | Lithium-titanium composite oxide |
| | | | Observed particle size (μm) | | 1 | - |
| | | | | | 2 | - |
| | | | | | 3 | - |
| | | | | | 4 | - |
| | | | | | 5 | - |
| | | | Average of observed particle size (μm) | | | - |
| | | | D50 particle size (μm) | | | - |
| | | | Weight percentage (%) | | | 15.00 |
| | | 2 | Material | | | Niobium-titanium composite oxide |
| | | | Observed particle size (μm) | | 1 | - |
| | | | | | 2 | - |
| | | | | | 3 | - |
| | | | | | 4 | - |
| | | | | | 5 | - |
| | | | Average of observed particle size (μm) | | | - |
| | | | D50 particle size (μm) | | | - |
| | | | Weight percentage (%) | | | 15.00 |
| | Observed particle size of iron oxide (μm) | | | SDf | 1 | - |
| | | | | | 2 | - |
| | | | | | 3 | - |
| | | | | | 4 | - |
| | | | | | 5 | - |
| | Average of observed particle size of iron oxide (μm) | | | aSDf | | - |
| | Observed particle size of lithium-titanium composite oxide (μm) | | | SDlt | 1 | - |
| | | | | | 2 | - |
| | | | | | 3 | - |
| | | | | | 4 | - |
| | | | | | 5 | - |
| | Average of observed particle size of | | | aSDlt | | - |

| | | | | |
|---|---|---|---|---|
| | lithium-titanium composite oxide (μm) | | | |
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 70.00 |
| | Weight percentage of lithium-titanium composite oxide in composition (%) | Wlt | | 15.00 |
| | Weight percentage of niobium-titanium composite oxide in composition (%) | Wtn | | 15.00 |
| | Wf/Wlt | | | 4.67 |
| | Wf/Wtn | | | 4.67 |
| | Wlt/Wtn | | | 1.00 |
| | Wf/(Wlt+Wtn) | | | 2.33 |
| Electrode | Weight percentage of composition in electrode (%) | Wc | | 65.00 |
| | Weight percentage of conductive additive in electrode (%) | Wca | | 20.00 |
| | Weight percentage of adhesive in electrode (%) | Wa | | 15.00 |
| | Wc/Wca | | | 3.25 |
| | (Wc+Wca)/Wa | | | 5.67 |
| | Density (g/m$^3$) | DSet | | 1.28 |
| | Resistance (mΩ) | Ret | | 1.10 |
| | Thickness of electrode (μm) | | | 19.0 |
| Battery | First oxidation peak | Voltage (V) | Vo1 | 1.67 |
| | | Peak value (mAh/V) | Io1 | 3.57 |
| | First reduction peak | Voltage (V) | Vr1 | 0.93 |
| | | Peak value (mAh/V) | Ir1 | -5.16 |
| | Coulombic efficiency of 1st cycle (%) | | | 174.00 |
| | \|Vo1-Vr1\| (V) | | | 0.74 |
| | Capacity at 10th discharge with current of 1 C (mAh/g) | C1V10 | | 519.95 |
| | Capacity at 100th discharge with current of 1 C (mAh/g) | C1V100 | | 522.83 |
| | Capacity at 400th discharge with current of 1 C (mAh/g) | C1V400 | | 44.77 |
| | Capacity at 500th discharge with current of 1 C (mAh/g) | C1V500 | | 30.49 |

| | | | |
|---|---|---|---|
| | C1V100/C1V10 | | 1.01 |
| | C1V400/C1V10 | | 0.09 |
| | C1V500/C1V10 | | 0.06 |
| | Number of cycles dropped to 80% capacity with current of 1 C | CN80 | 279 |

<Example 5>

The composition of Example 5 includes a metal oxide and a composite metal oxide, wherein each of the metal oxide and the composite metal oxide is an active material. The metal oxide is an iron oxide, and the iron oxide is a triiron tetraoxide. The composite metal oxide is a niobium-titanium composite oxide.

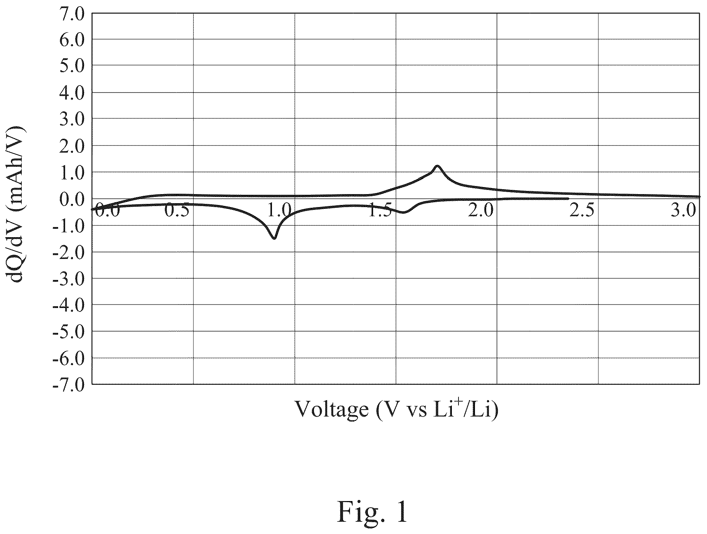

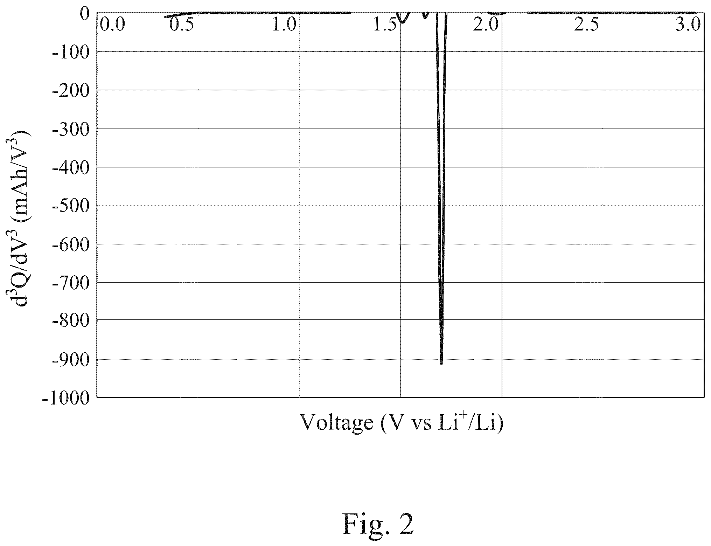

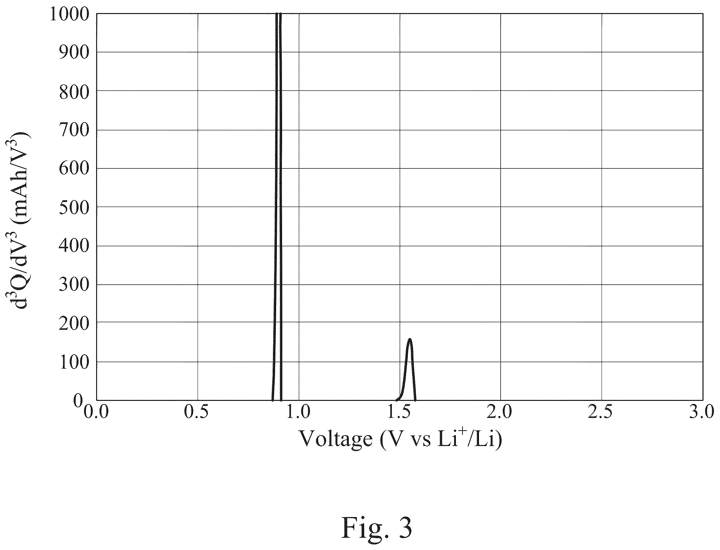

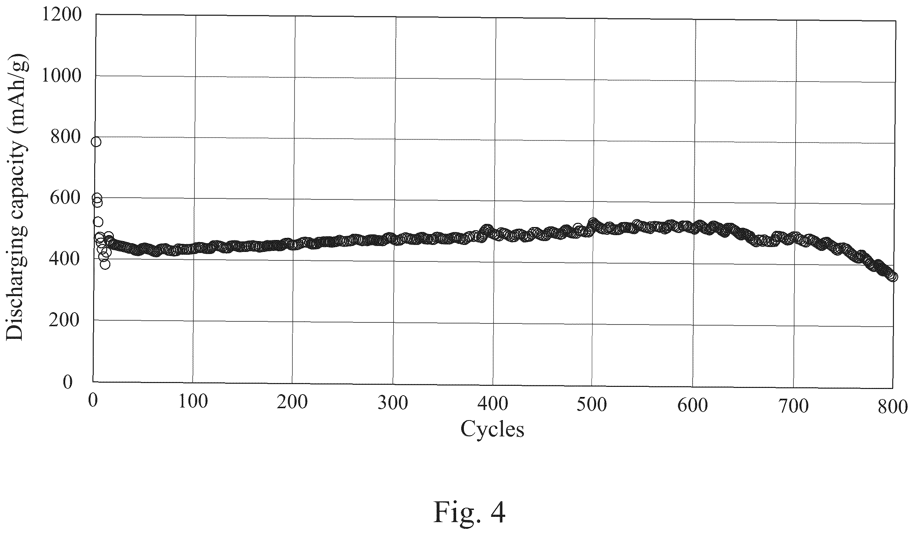

Fig. 1 is a diagram of charging and discharging voltage-electric quantity differential curve with a constant current of Example 5. Fig. 2 is a diagram of cubic differential curve during charging of Example 5. Fig. 3 is a diagram of cubic differential curve during discharging of Example 5. Fig. 4 is a discharge cycle diagram with a current of 1 C of Example 5. The detail data of the composition, the electrode and the battery of Example 5 are shown in Table 6.

Table 6

| | | | | | |
|---|---|---|---|---|---|
| Composition | Metal oxide | Material | | | Triiron tetraoxide |
| | | Observed particle size (μm) | | 1 | - |
| | | | | 2 | - |
| | | | | 3 | - |
| | | | | 4 | - |
| | | | | 5 | - |
| | | Average of observed particle size (μm) | | | - |
| | | D50 particle size (μm) | | | - |
| | | Weight percentage (%) | | | 50.00 |
| | Complex metal oxide | 1 | Material | | Niobium-titanium composite oxide |
| | | | Observed particle size (μm) | 1 | - |
| | | | | 2 | - |
| | | | | 3 | - |
| | | | | 4 | - |

| | | | | | | |
|---|---|---|---|---|---|---|
| | | 2 | | 5 | | - |
| | | | Average of observed particle size (μm) | | | - |
| | | | D50 particle size (μm) | | | - |
| | | | Weight percentage (%) | | | 50.00 |
| | | 2 | Material | | | - |
| | | | Observed particle size (μm) | 1 | | - |
| | | | | 2 | | - |
| | | | | 3 | | - |
| | | | | 4 | | - |
| | | | | 5 | | - |
| | | | Average of observed particle size (μm) | | | - |
| | | | D50 particle size (μm) | | | - |
| | | | Weight percentage (%) | | | - |
| | Observed particle size of iron oxide (μm) | | | SDf | 1 | - |
| | | | | | 2 | - |
| | | | | | 3 | - |
| | | | | | 4 | - |
| | | | | | 5 | - |
| | Average of observed particle size of iron oxide (μm) | | | aSDf | | - |
| | Observed particle size of lithium-titanium composite oxide (μm) | | | SDlt | 1 | - |
| | | | | | 2 | - |
| | | | | | 3 | - |
| | | | | | 4 | - |
| | | | | | 5 | - |
| | Average observed particle size of lithium-titanium composite oxide (μm) | | | aSDlt | | - |
| | Observed particle size of niobium-titanium composite oxide (μm) | | | SDtn | 1 | - |
| | | | | | 2 | - |
| | | | | | 3 | - |
| | | | | | 4 | - |
| | | | | | 5 | - |
| | Average of observed particle size of niobium-titanium composite oxide (μm) | | | aSDtn | | - |
| | D50 particle size of iron oxide (μm) | | | D50f | | - |
| | D50 particle size of lithium-titanium composite oxide (μm) | | | D50lt | | - |
| | D50 particle size of niobium-titanium composite oxide (μm) | | | D50tn | | - |
| | Weight percentage of iron oxide in composition (%) | | | Wf | | 50.00 |
| | Weight percentage of lithium-titanium composite oxide in composition (%) | | | Wlt | | - |
| | Weight percentage of niobium-titanium composite oxide in composition (%) | | | Wtn | | 50.00 |
| | Wf/Wlt | | | | | - |

| | | | | |
|---|---|---|---|---|
| | Wf/Wtn | | | 1.00 |
| | Wlt/Wtn | | | - |
| | Wf/(Wlt+Wtn) | | | - |
| Electrode | Weight percentage of composition in electrode (%) | | Wc | 65.00 |
| | Weight percentage of conductive additive in electrode (%) | | Wca | 20.00 |
| | Weight percentage of adhesive in electrode (%) | | Wa | 15.00 |
| | Wc/Wca | | | 3.25 |
| | (Wc+Wca)/Wa | | | 5.67 |
| | Density (g/m$^3$) | | DSet | 1.17 |
| | Resistance (mΩ) | | Ret | 0.91 |
| | Thickness of electrode (μm) | | | 14.0 |
| Battery | First oxidation peak | Voltage (V) | Vo1 | 1.70 |
| | | Peak value (mAh/V) | Io1 | 1.24 |
| | First reduction peak | Voltage (V) | Vr1 | 0.90 |
| | | Peak value (mAh/V) | Ir1 | -1.41 |
| | Coulombic efficiency of 1st cycle (%) | | | 77.00 |
| | \|Vo1-Vr1\| (V) | | | 0.80 |
| | Capacity at 10th discharge with current of 1 C (mAh/g) | | C1V10 | 409.75 |
| | Capacity at 100th discharge with current of 1 C (mAh/g) | | C1V100 | 437.34 |
| | Capacity at 400th discharge with current of 1 C (mAh/g) | | C1V400 | 491.42 |
| | Capacity at 500th discharge with current of 1 C (mAh/g) | | C1V500 | 530.32 |
| | C1V100/C1V10 | | | 1.07 |
| | C1V400/C1V10 | | | 1.20 |
| | C1V500/C1V10 | | | 1.29 |
| | Number of cycles dropped to 80% capacity with current of 1 C | | CN80 | 785 |

<Example 6>

The composition of Example 6 includes a metal oxide and a composite metal oxide, wherein each of the metal oxide and the composite metal oxide is an active material. The metal oxide is an iron oxide, and the iron oxide is a triiron tetraoxide. The composite metal oxide is a niobium-titanium composite oxide.

The detail data of the composition, the electrode and the battery of Example 6 are shown in Table 7.

Table 7

| | | | | | |
|---|---|---|---|---|---|
| Composition | Metal oxide | Material | | | Triiron tetraoxide |
| | | Observed particle size (μm) | | 1 | 0.680 |
| | | | | 2 | 0.559 |
| | | | | 3 | 0.485 |
| | | | | 4 | 0.637 |
| | | | | 5 | 0.507 |
| | | Average of observed particle size (μm) | | | 0.574 |
| | | D50 particle size (μm) | | | - |
| | | Weight percentage (%) | | | 10.00 |
| | Complex metal oxide | 1 | Material | | Niobium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 90.00 |
| | | 2 | Material | | - |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | - |
| | Observed particle size of iron oxide (μm) | | SDf | 1 | 0.680 |
| | | | | 2 | 0.559 |
| | | | | 3 | 0.485 |
| | | | | 4 | 0.637 |
| | | | | 5 | 0.507 |
| | Average of observed particle size of iron oxide (μm) | | aSDf | | 0.574 |
| | Observed particle size of lithium-titanium composite oxide (μm) | | SDlt | 1 | - |
| | | | | 2 | - |
| | | | | 3 | - |
| | | | | 4 | - |
| | | | | 5 | - |
| | Average of observed particle size of lithium-titanium composite oxide (μm) | | aSDlt | | - |

| | | | | |
|---|---|---|---|---|
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 10.00 |
| | Weight percentage of lithium-titanium composite oxide in composition (%) | Wlt | | - |
| | Weight percentage of niobium-titanium composite oxide in composition (%) | Wtn | | 90.00 |
| | Wf/Wlt | | | - |
| | Wf/Wtn | | | 0.11 |
| | Wlt/Wtn | | | - |
| | Wf/(Wlt+Wtn) | | | - |
| Electrode | Weight percentage of composition in electrode (%) | Wc | | 85.00 |
| | Weight percentage of conductive additive in electrode (%) | Wca | | 10.00 |
| | Weight percentage of adhesive in electrode (%) | Wa | | 5.00 |
| | Wc/Wca | | | 8.50 |
| | (Wc+Wca)/Wa | | | 19.00 |
| | Density (g/m$^3$) | DSet | | 2.38 |
| | Resistance (mΩ) | Ret | | - |
| | Thickness of electrode (μm) | | | 18.0 |
| Battery | First oxidation peak - Voltage (V) | Vo1 | | 1.75 |
| | First oxidation peak - Peak value (mAh/V) | Io1 | | 10.53 |
| | First reduction peak - Voltage (V) | Vr1 | | 1.40 |
| | First reduction peak - Peak value (mAh/V) | Ir1 | | -2.93 |
| | Coulombic efficiency of 1st cycle (%) | | | 101.00 |
| | \|Vo1-Vr1\| (V) | | | 0.36 |
| | Capacity at 10th discharge with current of 1 C (mAh/g) | C1V10 | | 212.97 |
| | Capacity at 100th discharge with current of 1 C (mAh/g) | C1V100 | | - |
| | Capacity at 400th discharge with current of 1 C (mAh/g) | C1V400 | | - |
| | Capacity at 500th discharge with current of 1 C (mAh/g) | C1V500 | | - |
| | C1V100/C1V10 | | | - |

| | | | |
|---|---|---|---|
| | C1V400/C1V10 | | - |
| | C1V500/C1V10 | | - |
| | Number of cycles dropped to 80% capacity with current of 1 C | CN80 | - |

<Example 7>

The composition of Example 7 includes a metal oxide and a composite metal oxide, wherein each of the metal oxide and the composite metal oxide is an active material. The metal oxide is an iron oxide, and the iron oxide is a triiron tetraoxide. The composite metal oxide is a niobium-titanium composite oxide.

The detail data of the composition, the electrode and the battery of Example 7 are shown in Table 8.

| Table 8 | | | | | |
|---|---|---|---|---|---|
| Composition | Metal oxide | Material | | | Triiron tetraoxide |
| | | Observed particle size (μm) | | 1 | 0.805 |
| | | | | 2 | 0.772 |
| | | | | 3 | 0.831 |
| | | | | 4 | 1.025 |
| | | | | 5 | 0.830 |
| | | Average of observed particle size (μm) | | | 0.853 |
| | | D50 particle size (μm) | | | - |
| | | Weight percentage (%) | | | 5.00 |
| | Complex metal oxide | 1 | Material | | Niobium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 95.00 |
| | | 2 | Material | | - |
| | | | Observed particle size (μm) | 1 | - |
| | | | | 2 | - |
| | | | | 3 | - |
| | | | | 4 | - |
| | | | | 5 | - |

| | | | | |
|---|---|---|---|---|
| | | Average of observed particle size (μm) | | - |
| | | D50 particle size (μm) | | - |
| | | Weight percentage (%) | | - |
| | Observed particle size of iron oxide (μm) | SDf | 1 | 0.805 |
| | | | 2 | 0.772 |
| | | | 3 | 0.831 |
| | | | 4 | 1.025 |
| | | | 5 | 0.830 |
| | Average of observed particle size of iron oxide (μm) | aSDf | | 0.853 |
| | Observed particle size of lithium-titanium composite oxide (μm) | SDlt | 1 | - |
| | | | 2 | - |
| | | | 3 | - |
| | | | 4 | - |
| | | | 5 | - |
| | Average of observed particle size of lithium-titanium composite oxide (μm) | aSDlt | | - |
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 5.00 |
| | Weight percentage of lithium-titanium composite oxide in composition (%) | Wlt | | - |
| | Weight percentage of niobium-titanium composite oxide in composition (%) | Wtn | | 95.00 |
| | Wf/Wlt | | | - |
| | Wf/Wtn | | | 0.05 |
| | Wlt/Wtn | | | - |
| | Wf/(Wlt+Wtn) | | | - |
| Electrode | Weight percentage of composition in electrode (%) | Wc | | 85.00 |
| | Weight percentage of conductive additive in electrode (%) | Wca | | 10.00 |

| | | | | |
|---|---|---|---|---|
| | Weight percentage of adhesive in electrode (%) | | Wa | 5.00 |
| | Wc/Wca | | | 8.50 |
| | (Wc+Wca)/Wa | | | 19.00 |
| | Density (g/m$^3$) | | DSet | 2.45 |
| | Resistance (mΩ) | | Ret | - |
| | Thickness of electrode (μm) | | | 18.0 |
| Battery | First oxidation peak | Voltage (V) | Vo1 | 1.80 |
| | | Peak value (mAh/V) | Io1 | 8.05 |
| | First reduction peak | Voltage (V) | Vr1 | 1.49 |
| | | Peak value (mAh/V) | Ir1 | -4.01 |
| | Coulombic efficiency of 1st cycle (%) | | | 81.00 |
| | \|Vo1-Vr1\| (V) | | | 0.31 |
| | Capacity at 10th discharge with current of 1 C (mAh/g) | | C1V10 | 209.45 |
| | Capacity at 100th discharge with current of 1 C (mAh/g) | | C1V100 | - |
| | Capacity at 400th discharge with current of 1 C (mAh/g) | | C1V400 | - |
| | Capacity at 500th discharge with current of 1 C (mAh/g) | | C1V500 | - |
| | C1V100/C1V10 | | | - |
| | C1V400/C1V10 | | | - |
| | C1V500/C1V10 | | | - |
| | Number of cycles dropped to 80% capacity with current of 1 C | | CN80 | - |

<Example 8>

The composition of Example 8 includes a metal oxide and a composite metal oxide, wherein each of the metal oxide and the composite metal oxide is an active material. The metal oxide is an iron oxide, and the iron oxide is a triiron tetraoxide. The composite metal oxide is a niobium-titanium composite oxide.

The detail data of the composition, the electrode and the battery of Example 8 are shown in Table 9.

Table 9

| | | | | | Triiron tetraoxide |
|---|---|---|---|---|---|
| Composition | Metal oxide | Material | | | Triiron tetraoxide |
| | | Observed particle size (μm) | | 1 | - |
| | | | | 2 | - |
| | | | | 3 | - |
| | | | | 4 | - |
| | | | | 5 | - |
| | | Average of observed particle size (μm) | | | - |
| | | D50 particle size (μm) | | | - |
| | | Weight percentage (%) | | | 5.00 |
| | Complex metal oxide | 1 | Material | | Niobium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 95.00 |
| | | 2 | Material | | - |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | - |
| | Observed particle size of iron oxide (μm) | | SDf | 1 | - |
| | | | | 2 | - |
| | | | | 3 | - |
| | | | | 4 | - |
| | | | | 5 | - |
| | Average of observed particle size of iron oxide (μm) | | aSDf | | - |
| | Observed particle size of lithium-titanium composite oxide (μm) | | SDlt | 1 | - |
| | | | | 2 | - |
| | | | | 3 | - |
| | | | | 4 | - |
| | | | | 5 | - |
| | Average of observed particle size of lithium-titanium composite oxide (μm) | | aSDlt | | - |
| | Observed particle size of niobium-titanium composite oxide (μm) | | SDtn | 1 | - |
| | | | | 2 | - |
| | | | | 3 | - |
| | | | | 4 | - |
| | | | | 5 | - |
| | Average of observed particle size of | | aSDtn | | - |

| | | | | |
|---|---|---|---|---|
| | niobium-titanium composite oxide (μm) | | | |
| | D50 particle size of iron oxide (μm) | | D50f | - |
| | D50 particle size of lithium-titanium composite oxide (μm) | | D50lt | - |
| | D50 particle size of niobium-titanium composite oxide (μm) | | D50tn | - |
| | Weight percentage of iron oxide in composition (%) | | Wf | 5.00 |
| | Weight percentage of lithium-titanium composite oxide in composition (%) | | Wlt | - |
| | Weight percentage of niobium-titanium composite oxide in composition (%) | | Wtn | 95.00 |
| | Wf/Wlt | | | - |
| | Wf/Wtn | | | 0.05 |
| | Wlt/Wtn | | | - |
| | Wf/(Wlt+Wtn) | | | - |
| Electrode | Weight percentage of composition in electrode (%) | | Wc | 85.00 |
| | Weight percentage of conductive additive in electrode (%) | | Wca | 10.00 |
| | Weight percentage of adhesive in electrode (%) | | Wa | 5.00 |
| | Wc/Wca | | | 8.50 |
| | (Wc+Wca)/Wa | | | 19.00 |
| | Density (g/m$^3$) | | DSet | 1.37 |
| | Resistance (mΩ) | | Ret | 1.24 |
| | Thickness of electrode (μm) | | | 33.0 |
| Battery | First oxidation peak | Voltage (V) | Vo1 | 1.84 |
| | | Peak value (mAh/V) | Io1 | 3.72 |
| | First reduction peak | Voltage (V) | Vr1 | 1.45 |
| | | Peak value (mAh/V) | Ir1 | -2.62 |
| | Coulombic efficiency of 1st cycle (%) | | | 88.00 |
| | \|Vo1-Vr1\| (V) | | | 0.39 |
| | Capacity at 10th discharge with current of 1 C (mAh/g) | | C1V10 | 207.49 |
| | Capacity at 100th discharge with current of 1 C (mAh/g) | | C1V100 | - |
| | Capacity at 400th discharge with current of 1 C (mAh/g) | | C1V400 | - |
| | Capacity at 500th discharge with current of 1 C (mAh/g) | | C1V500 | - |
| | C1V100/C1V10 | | | - |
| | C1V400/C1V10 | | | - |
| | C1V500/C1V10 | | | - |
| | Number of cycles dropped to 80% capacity with current of 1 C | | CN80 | - |

<Example 9>

The composition of Example 9 includes a metal oxide and a composite metal oxide, wherein each of the metal oxide and the composite metal oxide is an active material. The metal oxide is an iron oxide, and the iron oxide is a triiron tetraoxide. The composite metal oxide is a lithium-titanium composite oxide.

The detail data of the composition, the electrode and the battery of Example 9 are shown in Table 10.

Table 10

| | | | | | |
|---|---|---|---|---|---|
| Composition | Metal oxide | Material | | | Triiron tetraoxide |
| | | Observed particle size (μm) | | 1 | - |
| | | | | 2 | - |
| | | | | 3 | - |
| | | | | 4 | - |
| | | | | 5 | - |
| | | Average of observed particle size (μm) | | | - |
| | | D50 particle size (μm) | | | - |
| | | Weight percentage (%) | | | 50.00 |
| | Complex metal oxide | 1 | Material | | Lithium-titanium composite oxide |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | 50.00 |
| | | 2 | Material | | - |
| | | | Observed particle size (μm) | 1 | - |
| | | | | 2 | - |
| | | | | 3 | - |
| | | | | 4 | - |
| | | | | 5 | - |
| | | | Average of observed particle size (μm) | | - |
| | | | D50 particle size (μm) | | - |
| | | | Weight percentage (%) | | - |
| | Observed particle size of iron oxide (μm) | | SDf | 1 | - |
| | | | | 2 | - |

| | | | | |
|---|---|---|---|---|
| | | | 3 | - |
| | | | 4 | - |
| | | | 5 | - |
| | Average of observed particle size of iron oxide (μm) | aSDf | | - |
| | Observed particle size of lithium-titanium composite oxide (μm) | SDlt | 1 | - |
| | | | 2 | - |
| | | | 3 | - |
| | | | 4 | - |
| | | | 5 | - |
| | Average of observed particle size of lithium-titanium composite oxide (μm) | aSDlt | | - |
| | Observed particle size of niobium-titanium composite oxide (μm) | SDtn | 1 | - |
| | | | 2 | - |
| | | | 3 | - |
| | | | 4 | - |
| | | | 5 | - |
| | Average of observed particle size of niobium-titanium composite oxide (μm) | aSDtn | | - |
| | D50 particle size of iron oxide (μm) | D50f | | - |
| | D50 particle size of lithium-titanium composite oxide (μm) | D50lt | | - |
| | D50 particle size of niobium-titanium composite oxide (μm) | D50tn | | - |
| | Weight percentage of iron oxide in composition (%) | Wf | | 50.00 |
| | Weight percentage of lithium-titanium composite oxide in composition (%) | Wlt | | 50.00 |
| | Weight percentage of niobium-titanium composite oxide in composition (%) | Wtn | | - |
| | Wf/Wlt | | | 1.00 |
| | Wf/Wtn | | | - |
| | Wlt/Wtn | | | - |
| | Wf/(Wlt+Wtn) | | | - |
| Electrode | Weight percentage of composition in electrode (%) | Wc | | 90.00 |
| | Weight percentage of conductive additive in electrode (%) | Wca | | 5.00 |
| | Weight percentage of adhesive in electrode (%) | Wa | | 5.00 |
| | Wc/Wca | | | 18.00 |
| | (Wc+Wca)/Wa | | | 19.00 |
| | Density (g/m$^3$) | DSet | | 1.53 |
| | Resistance (mΩ) | Ret | | 17.8 |
| | Thickness of electrode (μm) | | | 24.0 |

| | | | | |
|---|---|---|---|---|
| Battery | First oxidation peak | Voltage (V) | Vo1 | 1.79 |
| | | Peak value (mAh/V) | Io1 | 116.01 |
| | First reduction peak | Voltage (V) | Vr1 | 0.78 |
| | | Peak value (mAh/V) | Ir1 | -2.74 |
| | Coulombic efficiency of 1st cycle (%) | | | 85.00 |
| | \|Vo1-Vr1\| (V) | | | 1.02 |
| | Capacity at 10th discharge with current of 1 C (mAh/g) | | C1V10 | 326.34 |
| | Capacity at 100th discharge with current of 1 C (mAh/g) | | C1V100 | - |
| | Capacity at 400th discharge with current of 1 C (mAh/g) | | C1V400 | - |
| | Capacity at 500th discharge with current of 1 C (mAh/g) | | C1V500 | - |
| | C1V100/C1V10 | | | - |
| | C1V400/C1V10 | | | - |
| | C1V500/C1V10 | | | - |
| | Number of cycles dropped to 80% capacity with current of 1 C | | CN80 | - |

## Claims

1. A composition, **characterized in** comprising:

   a metal oxide being an iron oxide; and
   at least two composite metal oxides comprising a lithium-titanium composite oxide and a niobium-titanium composite oxide;
   wherein each of the metal oxide and the at least two composite metal oxides is an active material;
   wherein a weight percentage of the iron oxide in the composition is Wf, a weight percentage of the lithium-titanium composite oxide in the composition is Wlt, a weight percentage of the niobium-titanium composite oxide in the composition is Wtn, and the following condition is satisfied:

$$0.10 \leq Wf/(Wlt+Wtn) \leq 4.00.$$

2. The composition of claim 1, wherein the weight percentage of the lithium-titanium composite oxide in the composition is Wlt, the weight percentage of the niobium-titanium composite oxide in the composition is Wtn, and the following condition is satisfied:

$$0.80 \leq Wlt/Wtn \leq 1.30.$$

3. The composition of claims 1 or 2, wherein the weight percentage of the iron oxide in the composition is Wf, the weight percentage of the lithium-titanium composite oxide in the composition is Wlt, and the following condition is satisfied:

$$1.00 \leq Wf/Wlt \leq 3.00.$$

4. The composition of any one of claims 1 to 3, wherein the weight percentage of the iron oxide in the composition is Wf, the weight percentage of the niobium-titanium composite oxide in the composition is Wtn, and the following condition is satisfied:

$$1.00 \leq Wf/Wtn \leq 3.00.$$

**5.** The composition of any one of claims 1 to 4, wherein the iron oxide is a triiron tetraoxide.

**6.** The composition of any one of claims 1 to 5, wherein an observed particle size of the iron oxide is SDf, and the following condition is satisfied:

$$0.300\ \mu m \leq SDf \leq 1.000\ \mu m.$$

**7.** The composition of claim 6, wherein an average of the observed particle size of the iron oxide is aSDf, and the following condition is satisfied:

$$0.500\ \mu m \leq aSDf \leq 0.900\ \mu m.$$

**8.** The composition of any one of claims 1 to 7, wherein an observed particle size of the lithium-titanium composite oxide is SDlt, and the following condition is satisfied:

$$8.000\ \mu m \leq SDlt \leq 18.000\ \mu m.$$

**9.** The composition of claim 8, wherein an average of the observed particle size of the lithium-titanium composite oxide is aSDlt, and the following condition is satisfied:

$$10.000\ \mu m \leq aSDlt \leq 16.000\ \mu m.$$

**10.** The composition of any one of claims 1 to 9, wherein an observed particle size of the niobium-titanium composite oxide is SDtn, and the following condition is satisfied:

$$5.000\ \mu m \leq SDtn \leq 9.000\ \mu m.$$

**11.** The composition of claim 10, wherein an average of the observed particle size of the niobium-titanium composite oxide is aSDtn, and the following condition is satisfied:

$$6.000\ \mu m \leq aSDtn \leq 8.000\ \mu m.$$

**12.** An electrode, **characterized in** comprising:

the composition of any one of claims 1 to 11;
a conductive additive; and
an adhesive.

**13.** The electrode of claim 12, wherein a weight percentage of the composition in the electrode is Wc, a weight percentage of the conductive additive in the electrode is Wca, and the following condition is satisfied:

$$1.50 \leq Wc/Wca \leq 10.00.$$

**14.** The electrode of claims 12 or 13, wherein the weight percentage of the composition in the electrode is Wc, the weight percentage of the conductive additive in the electrode is Wca, a weight percentage of the adhesive in the electrode is Wa, and the following condition is satisfied:

$$3.00 \leq (Wc+Wca)/Wa \leq 10.00.$$

**15.** A battery, **characterized in** comprising:

the electrode of any one of claims 12-14;
a cathode; and
an electrolyte;
wherein the electrode is an anode.

**16.** A composition, **characterized in** comprising:

a metal oxide being an iron oxide, and the iron oxide is a triiron tetraoxide; and
a composite metal oxide being a lithium-titanium composite oxide or a niobium-titanium composite oxide;
wherein each of the metal oxide and the composite metal oxide is an active material;
wherein a weight percentage of the iron oxide in the composition is Wf, a weight percentage of the lithium-titanium composite oxide in the composition is Wlt, a weight percentage of the niobium-titanium composite oxide in the composition is Wtn, and the following condition is satisfied:

$$0.05 \leq Wf/Wlt \leq 10.00;$$

or

$$0.05 \leq Wf/Wtn \leq 10.00.$$

**17.** The composition of claim 16, wherein a D50 particle size of the iron oxide is D50f, and the following condition is satisfied:

$$0.200\ \mu m \leq D50f \leq 1.200\ \mu m.$$

**18.** The composition of claims 16 or 17, wherein a D50 particle size of the lithium-titanium composite oxide is D50lt, and the following condition is satisfied:

$$5.000\ \mu m \leq D50lt \leq 20.000\ \mu m.$$

**19.** The composition of any one of claims 16 to 18, wherein a D50 particle size of the niobium-titanium composite oxide is D50tn, and the following condition is satisfied:

$$3.000\ \mu m \leq D50tn \leq 10.000\ \mu m.$$

**20.** An electrode, **characterized in** comprising:

the composition of any one of claims 16 to 19;
a conductive additive; and
an adhesive.

**21.** The electrode of claim 20, wherein a weight percentage of the composition in the electrode is Wc, a weight percentage of the conductive additive in the electrode is Wca, and the following condition is satisfied:

$$1.00 < Wc/Wca \leq 20.00.$$

**22.** The electrode of claims 20 or 21, wherein the weight percentage of the composition in the electrode is Wc, the weight percentage of the conductive additive in the electrode is Wca, a weight percentage of the adhesive in the electrode is Wa, and the following condition is satisfied:

$$1.00 \leq (Wc+Wca)/Wa \leq 20.00.$$

**23.** The electrode of any one of claims 20 to 22, wherein a density of the electrode is DSet, and the following condition is satisfied:

$$1.00\ g/cm^3 \leq DSet \leq 2.50\ g/cm^3.$$

**24.** The electrode of any one of claims 20 to 23, wherein a resistance of the electrode is Ret, and the following condition is satisfied:

$$0.3\ m\Omega \leq Ret \leq 2.0\ m\Omega.$$

**25.** A battery, **characterized in** comprising:

the electrode of any one of claims 20 to 24;
a cathode; and
an electrolyte;
wherein the electrode is an anode.

**26.** The battery of claim 25, wherein the battery has a first oxidation peak, a second oxidation peak, a first reduction peak and a second reduction peak, a voltage of the first oxidation peak is Vo1, a voltage of the first reduction peak is Vr1, and the following condition is satisfied:

$$0.30\ V \leq |Vo1\text{-}Vr1| \leq 1.20\ V.$$

**27.** The battery of claims 25 or 26, wherein a capacity at a 10th discharge of the battery with a current of 1 C is C1V10, a capacity at a 100th discharge of the battery with the current of 1 C is C1V100, and the following condition is satisfied:

$$0.80 \leq C1V100/C1V10.$$

**28.** The battery of any one of claims 25 to 27, wherein the capacity at the 10th discharge of the battery with the current of 1 C is C1V10, a capacity at a 400th discharge of the battery with the current of 1 C is C1V400, and the following condition is satisfied:

$$0.80 \leq C1V400/C1V10.$$

**29.** The battery of any one of claims 25 to 28, wherein the capacity at the 10th discharge of the battery with the current of 1 C is C1V10, a capacity at a 500th discharge of the battery with the current of 1 C is C1V500, and the following condition is satisfied:

$$0.80 \leq C1V500/C1V10.$$

**30.** The battery of any one of claims 25 to 29, wherein a number of cycles of the battery dropped to 80% of a capacity at a current of 1 C is CN80, and the following condition is satisfied:

$$300 \leq CN80.$$

**31.** The battery of any one of claims 25 to 30, wherein the weight percentage of the iron oxide in the composition is Wf, the weight percentage of the lithium-titanium composite oxide in the composition is Wlt, the weight percentage of the niobium-titanium composite oxide in the composition is Wtn, the weight percentage of the composition in the electrode is Wc, the weight percentage of the conductive additive in the electrode is Wca, the weight percentage of the adhesive in the electrode is Wa, and the following conditions are satisfied:

$$0.90 \leq Wf/(Wlt+Wtn) \leq 1.20;$$

$$0.90 \leq Wlt/Wtn \leq 1.10;$$

$$1.80 \leq Wf/Wlt \leq 2.20;$$

$$1.80 \leq Wf/Wtn \leq 2.20;$$

$$2.90 \leq Wc/Wca \leq 3.30;$$

and

$$5.00 \leq (Wc+Wca)/Wa \leq 6.00.$$

7.0
6.0
5.0
4.0
3.0
2.0
1.0
0.0
-1.0
-2.0
-3.0
-4.0
-5.0
-6.0
-7.0
dQ/dV (mAh/V)
0.0
0.5
1.0
1.5
2.0
2.5
3.0
Voltage (V vs Li+/Li)


Fig. 1

0.0
0.5
1.0
1.5
2.0
2.5
3.0
Voltage (V vs Li+/Li)
0
-100
-200
-300
-400
-500
-600
-700
-800
-900
-1000
d3Q/dV3 (mAh/V3)


Fig. 2

d³Q/dV³ (mAh/V³)
1000
900
800
700
600
500
400
300
200
100
0
0.0
0.5
1.0
1.5
2.0
2.5
3.0
Voltage (V vs Li⁺/Li)


Fig. 3

Discharging capacity (mAh/g)
0
200
400
600
800
1000
1200
Cycles
0
100
200
300
400
500
600
700
800

Fig. 4